(19) Europäisches Patentamt
European Patent Office
Office européen des brevets

(11) **EP 4 446 769 A1**

(12) **EUROPEAN PATENT APPLICATION**
published in accordance with Art. 153(4) EPC

(43) Date of publication:
**16.10.2024 Bulletin 2024/42**

(21) Application number: **22914347.4**

(22) Date of filing: **19.12.2022**

(51) International Patent Classification (IPC):
**G01S 7/48** (2006.01)     **G01S 7/4861** (2020.01)
**G01S 7/487** (2006.01)     **G01S 17/02** (2020.01)

(52) Cooperative Patent Classification (CPC):
**G01S 7/48; G01S 7/4861; G01S 7/487;
G01S 17/02;** Y02A 90/10

(86) International application number:
**PCT/CN2022/139889**

(87) International publication number:
**WO 2023/125093 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.12.2021  CN 202111637896**

(71) Applicant: **Huawei Technologies Co., Ltd.
Shenzhen, Guangdong 518129 (CN)**

(72) Inventors:
• **XU, Cheng
  Shenzhen, Guangdong 518129 (CN)**
• **GAO, Hongbiao
  Shenzhen, Guangdong 518129 (CN)**
• **ZENG, Li
  Shenzhen, Guangdong 518129 (CN)**

(74) Representative: **Gill Jennings & Every LLP
The Broadgate Tower
20 Primrose Street
London EC2A 2ES (GB)**

(54) **TRANSMISSION APPARATUS, DETECTION SYSTEM, AND DETECTION METHOD OF LASER RADAR**

(57)     A sending apparatus, detection system, and detection method of a lidar are provided, to exclude a false target from a plurality of targets. Frequency-sweep optical signals with different slopes are introduced, the frequency-sweep slopes of the different frequency-sweep optical signals are opposite in sign in a time period, and absolute values of the frequency-sweep slopes are not equal. For a plurality of real targets, coherent detection is performed in at least two time periods separately corresponding to the different frequency-sweep optical signals. A distance and a velocity of the real target that are obtained through calculation by using the different frequency-sweep optical signals do not change, but a distance and a velocity of the false target change. Therefore, the distance and velocity of the real target are determined by using a same coherent detection result of the plurality of frequency-sweep optical signals. This can exclude the virtual target without increasing detection time. In addition, even if an I receiver or a Q receiver is used, velocity ambiguity does not occur, and costs can be further reduced.

Transmit N frequency-sweep optical signals, where N is an integer greater than 1; in the N frequency-sweep optical signals in a first time period, a frequency-sweep slope of a first frequency-sweep optical signal and a frequency-sweep slope of a second frequency-sweep optical signal are opposite in sign, or the frequency-sweep slope of the first frequency-sweep optical signal is 0 and the frequency-sweep slope of the second frequency-sweep optical signal is not 0; and frequencies of the N frequency-sweep optical signals are different ⌇ 2501

Multiplex the N frequency-sweep optical signals to obtain a radar transmit signal, and split the radar transmit signal into a local oscillator signal and a detection signal ⌇ 2502

Transmit the detection signal by using an antenna, where the local oscillator signal, together with an echo signal of the detection signal, is used for coherent detection, to obtain positioning information of a detected object ⌇ 2503

Receive the echo signal of the detection signal from the antenna, and perform frequency mixing on the echo signal and the local oscillator signal to generate a frequency mixed signal ⌇ 2504

Obtain the positioning information of the detected object based on the frequency mixed signal ⌇ 2505

FIG. 25

Processed by Luminess, 75001 PARIS (FR)

**Description**

**CROSS-REFERENCE TO RELATED APPLICATIONS**

This application claims priority to Chinese Patent Application No. 202111637896.0, filed with the China National Intellectual Property Administration on December 29, 2021 and entitled "SENDING APPARATUS, DETECTION SYSTEM, AND DETECTION METHOD OF LIDAR", which is incorporated herein by reference in its entirety.

**TECHNICAL FIELD**

This application relates to the field of optical communication technologies, and in particular, to a sending apparatus, detection system, and detection method of a lidar.

**BACKGROUND**

A coherent lidar may cause, by using a feature of a linear frequency modulation signal, a local oscillator signal to beat with an echo signal to generate a frequency mixed signal that varies with a distance and a velocity of a detected object, and may calculate distance information and velocity information of the detected object based on a frequency of the frequency mixed signal. The lidar has relatively high directivity, and an emitted light spot is small. However, when emitted light reaches an object at a relatively long distance, the light spot diverges due to the relatively long distance. Consequently, an emitted optical signal is irradiated to a plurality of objects, and a plurality of echo signals are generated. After coherent detection is performed on each of the plurality of echo signals together with the local oscillator signal, a plurality of targets are located, but a false target cannot be excluded from the plurality of targets.

**SUMMARY**

Embodiments of this application provide a sending apparatus, detection system, and detection method of a lidar, to exclude a false target from a plurality of targets.

According to a first aspect, an embodiment of this application provides a sending apparatus of a lidar, including a frequency-sweep signal source and a multiplexer/demultiplexer component. The frequency-sweep signal source transmits N frequency-sweep optical signals, where N is an integer greater than 1. In the N frequency-sweep optical signals in a first time period, a frequency-sweep slope of a first frequency-sweep optical signal and a frequency-sweep slope of a second frequency-sweep optical signal are opposite in sign, and an absolute value of the frequency-sweep slope of the first frequency-sweep optical signal is different from an absolute value of the frequency-sweep slope of the second frequency-sweep optical signal, or the frequency-sweep slope of the first frequency-sweep optical signal is not 0 and the frequency-sweep slope of the second frequency-sweep optical signal is 0. Frequencies of the N frequency-sweep optical signals are different. The multiplexer/demultiplexer component is configured to: multiplex the N frequency-sweep optical signals to obtain a radar transmit signal, demultiplex the radar transmit signal to obtain a local oscillator signal and a detection signal, transmit the detection signal by using an antenna, and send the local oscillator signal to a receiving apparatus of the lidar. According to the foregoing solution, the frequency-sweep optical signals with different slopes are introduced. In this case, for a plurality of real targets, coherent detection is performed in at least two time periods separately corresponding to the different frequency-sweep optical signals. A distance and a velocity of the real target that are obtained through calculation by using the different frequency-sweep optical signals do not change, but a distance and a velocity of a false target change. Therefore, the distance and velocity of the real target are determined by using a same coherent detection result of the plurality of frequency-sweep optical signals. This can exclude the virtual target without increasing detection time.

In a possible design, the first frequency-sweep optical signal and the second frequency-sweep optical signal are periodic frequency-sweep optical signals.

In a possible design, a signal cycle of the first frequency-sweep optical signal is M times a signal cycle of the second frequency-sweep optical signal, or the signal cycle of the second frequency-sweep signal is M times the signal cycle of the first frequency-sweep optical signal, and M is a positive integer.

In a possible design, the signal cycle of the first frequency-sweep optical signal is K times a detection cycle of the lidar, or the signal cycle of the second frequency-sweep optical signal is K times the detection cycle of the lidar, and K is a positive integer. In the foregoing design, a plurality of detections are performed in one signal cycle, so that detection efficiency can be improved, and detection delay can be reduced.

In a possible design, in one target signal cycle, the frequency-sweep slope of the first frequency-sweep signal in the first time period and a frequency-sweep slope of the first frequency-sweep signal in a second time period are opposite in sign; the frequency-sweep slope of the second frequency-sweep signal in the first time period and a frequency-sweep slope of the second frequency-sweep signal in the second time period are opposite in sign; the frequency-sweep slope of the first frequency-sweep signal in the first time period is different from the frequency-sweep slope of the second frequency-sweep signal in the second time period; and the frequency-sweep slope of the second frequency-sweep signal in the first time period is different from the frequency-sweep slope of the first frequency-sweep signal in the second time period. The target signal cycle is a largest signal cycle between the signal cycle of the first frequency-sweep optical signal and the signal cycle of the second frequency-sweep optical signal. In the foregoing design, the frequency-sweep slopes of the frequency-sweep optical signals in the two time periods are different. To avoid obtaining a same intermediate frequency signal generated by a beat frequency between the different frequency-sweep optical signals beating with the local oscillator signal, accuracy of excluding the false target is further improved.

In a possible design, a minimum frequency difference between the first frequency-sweep optical signal and the second frequency-sweep optical signal is related to a receiving bandwidth of the antenna. In the foregoing design, a frequency range of each frequency-sweep optical signal is determined based on the receiving bandwidth of the antenna, so that generation of a beat frequency signal that is not needed can be reduced, and accuracy of a calculation result can be improved. In addition, there is no need to use a computationally complex algorithm to distinguish and eliminate the beat frequency signal that is not needed. This further reduces computational complexity and reduces used processing resources.

In a possible design, the minimum frequency difference between the first frequency-sweep optical signal and the second frequency-sweep optical signal meets the following condition:

$$min(|f_1 - f_2|) > |fR_1| + |fR_2| + fOE$$

$f_1$ represents a frequency-sweep range of the first frequency-sweep optical signal, $f_2$ represents a frequency-sweep range of the second frequency-sweep optical signal, fRi represents a maximum value of a frequency shift amount of an echo signal of the first frequency-sweep optical signal relative to a local oscillator signal of the first frequency-sweep optical signal, $fR_2$ represents a maximum value of a frequency shift amount of an echo signal of the second frequency-sweep optical signal relative to a local oscillator signal of the second frequency-sweep optical signal, and *fOE* represents the receiving bandwidth of the antenna. The foregoing design provides a specific manner of determining the frequency difference between the frequency-sweep optical signals, and implementation is simple. In addition, a beat frequency signal that is not needed can be prevented from being generated, and accuracy of a calculation result can be improved. In addition, there is no need to use a computationally complex algorithm to distinguish and eliminate the beat frequency signal that is not needed. This further reduces computational complexity and reduces used processing resources.

In a possible design, the first frequency-sweep signal and the second frequency-sweep signal meet:

$$\text{round}\left(\frac{2K_1 R_{min}}{c}\right) > \text{round}\left(\frac{2K_2 R_{min}}{c}\right) \text{ or } \text{round}\left(\frac{2K_2 R_{min}}{c}\right) > \text{round}\left(\frac{2K_1 R_{min}}{c}\right)$$

round() represents an operation of rounding to a nearest integer, $K_1$ represents the absolute value of the frequency-sweep slope of the first frequency-sweep signal in the first time period, $K_2$ represents the absolute value of the frequency-sweep slope of the second frequency-sweep signal in the first time period, $R_{min}$ represents a minimum detectable distance of the lidar, and c represents a light speed. In the foregoing design, the frequency-sweep slopes of the different frequency-sweep optical signals meet the foregoing conditions. The frequency-sweep slopes of the different frequency-sweep optical signals are determined with reference to the minimum detectable distance. This can avoid reducing accuracy of excluding the false target due to a relatively small difference between the frequency-sweep slopes of the different frequency-sweep optical signals, and further improve accuracy of excluding the false target.

In a possible design, a waveform of the first frequency-sweep optical signal includes at least one of a triangular wave, a trapezoidal wave, and a sawtooth wave. When the frequency-sweep slope of the second frequency-sweep optical signal is not 0, a waveform of the second frequency-sweep optical signal includes at least one of a triangular wave, a trapezoidal wave, and a sawtooth wave.

In a possible design, wavelength change ranges of the N frequency-sweep optical signals are different, or polarization directions of the N frequency-sweep optical signals are different.

In a possible design, the frequency-sweep signal source includes N frequency-sweep lasers, and the frequency-sweep lasers are configured to transmit a frequency-sweep optical signal whose wavelength changes periodically. In the foregoing design, wavelengths of optical signals transmitted by different frequency-sweep lasers are adjusted, so that frequency ranges of the frequency-sweep optical signals transmitted by the different frequency-sweep lasers are different, and a frequency-sweep slope meets a requirement.

In a possible design, the frequency-sweep signal source includes a laser, a modulator, a radio frequency amplifier, and a frequency-sweep drive signal source. The frequency-sweep drive signal source is configured to generate N frequency-sweep signals whose frequencies change periodically, and the frequency-sweep signals are amplified by the radio frequency amplifier and then input to the modulator. The laser is configured to transmit a laser signal. The modulator is configured to modulate the N amplified frequency-sweep signals onto the laser signal, to obtain the N frequency-sweep optical signals. The foregoing design provides a manner of generating the N frequency-sweep optical signals that meet a requirement through external modulation. The frequency-sweep electrical signals that meet the frequency requirement are generated through digital signal processing, and then the frequency-sweep electrical signals are modulated onto the laser signal transmitted by the laser, and implementation is simple.

In a possible design, the frequency-sweep signal source includes N frequency-sweep signal transmitting components. Any one of the N frequency-sweep optical signal transmitting components includes a frequency-sweep drive signal source, a laser, a modulator, and a radio frequency amplifier. The frequency-sweep drive signal source is configured to generate one frequency-sweep signal whose frequency changes periodically, and the frequency-sweep signal is amplified by the radio frequency amplifier and then input to the modulator. The laser is configured to transmit a laser signal. The modulator is configured to modulate the amplified frequency-sweep signal onto the laser signal, to obtain one frequency-sweep optical signal. Wavelengths of laser signals transmitted by lasers included in different frequency-sweep signal transmitting components are different, and/or frequency ranges of frequency-sweep signals generated by frequency-sweep drive signal sources included in different frequency-sweep signal transmitting components are different. The foregoing design provides a manner of generating the N frequency-sweep optical signals by using the N frequency-sweep signal transmitting components, so that the N frequency-sweep optical signals that meet a requirement are relatively easily generated.

In a possible design, the frequency-sweep signal source includes a laser, an optical frequency comb, N micro-ring modulators, and N frequency-sweep drive signal sources. The laser is configured to transmit a laser signal. The optical frequency comb is configured to process the laser signal to obtain optical signals of N wavelengths. The N frequency-sweep drive signal sources are connected to the N micro-ring modulators in a one-to-one correspondence. The N micro-ring modulators are sequentially connected in series in optical paths of the optical signals of the N wavelengths. A first micro-ring modulator is configured to modulate, onto an optical signal of a wavelength corresponding to the first micro-ring modulator, a frequency-sweep signal that is output by a first frequency-sweep drive signal source and whose frequency range changes periodically. The N micro-ring modulators are in a one-to-one correspondence with the N wavelengths, and frequency ranges of frequency-sweep signals output by different frequency-sweep drive signal sources are different. The foregoing design provides a manner of generating the N frequency-sweep optical signals by combining the optical frequency comb and the N micro-ring modulators, and implementation is relatively simple.

In a possible design, the multiplexer/demultiplexer component includes a coupler, for example, a directional coupler.

In a possible design, polarization directions of the N frequency-sweep optical signals are different, and the multiplexer/demultiplexer component includes a polarization beam combiner and a polarization maintaining coupler. The polarization beam combiner is configured to perform, based on the polarization directions of the N frequency-sweep optical signals, beam combination on the N frequency-sweep optical signals to obtain a radar transmit signal. The polarization maintaining coupler is configured to demultiplex the radar transmit signal to obtain the local oscillator signal and the detection signal.

According to a second aspect, an embodiment of this application provides a detection system of a lidar, including the sending apparatus of the lidar according to any one of the first aspect or the designs of the first aspect and a receiving apparatus of the lidar. The receiving apparatus is configured to: receive a local oscillator signal from the sending apparatus and an echo signal of a detection signal sent by the sending apparatus, perform frequency mixing on the echo signal and the local oscillator signal to generate a frequency mixed signal, and obtain positioning information of a detected object based on the frequency mixed signal.

In a possible design, the receiving apparatus may obtain the positioning information of the detected object through IQ detection.

In a possible design, the receiving apparatus includes a 90-degree frequency mixer, a first photodetector, a second photodetector, a first analog-to-digital converter, a second analog-to-digital converter, and a signal processor. The 90-degree frequency mixer is configured to: perform frequency mixing on the echo signal that is of the detection signal and that is received from an antenna and the local oscillator signal to generate the frequency mixed signal, split the frequency mixed signal into a first signal and a second signal, send the first signal to the first photodetector, and send the second signal to the second photodetector. The first photodetector is configured to: perform detection on the first signal, and output the first signal to the first analog-to-digital converter for analog-to-digital conversion. The second photodetector is configured to: perform detection on the second signal, and output the second signal to the second analog-to-digital converter for analog-to-digital conversion. The signal processor is configured to process a digital signal that is output by the first analog-to-digital converter and a digital signal that is output by the second analog-to-digital converter, to obtain the positioning information of the detected object. In the foregoing design, positive and negative frequency information can be distinguished through IQ detection, so that a processing algorithm is simple and a requirement on processing performance of a signal processor is relatively low.

In a possible design, the receiving apparatus may obtain the positioning information of the detected object through I detection or Q detection.

In a possible design, the receiving apparatus includes a 180-degree frequency mixer, a third photodetector, a third analog-to-digital converter, and a signal processor. The 180-degree frequency mixer is configured to: perform frequency mixing on the echo signal that is of the detection signal and that is received from an antenna and the local oscillator signal to generate the frequency mixed signal, and send the frequency mixed signal to the third photodetector. The third photodetector is configured to: perform detection on the frequency mixed signal, and output the frequency mixed signal to the third analog-to-digital converter for analog-to-digital conversion. The signal processor is configured to process a digital signal that is output by the third analog-to-digital converter, to obtain the positioning information of the detected object. In the foregoing design, an I receiver or a Q receiver is used, and a plurality of frequency-sweep optical signals are multiplexed to form transmit signals. Because a distance and a velocity of a real target do not change, a local oscillator signal of each frequency-sweep optical signal may beat with an echo signal of each frequency-sweep optical signal to calculate a frequency mixed signal, and then a frequency component of a distance and a frequency component of a velocity are separately determined by using formulas corresponding to different cases, that is, three calculation results may be obtained based on each frequency-sweep optical signal. In this case, a same result in the plurality of calculation results is a final calculation result. This can resolve detection velocity ambiguity caused because it is impossible to determine a specific correct result in the calculation results corresponding to formulas that corresponding to the plurality of cases when the existing I receiver or Q receiver is used.

According to a third aspect, an embodiment of this application provides a detection method based on a lidar. The method includes: transmitting N frequency-sweep optical signals, where N is an integer greater than 1; in the N frequency-sweep optical signals in a first time period, a frequency-sweep slope of a first frequency-sweep optical signal and a frequency-sweep slope of a second frequency-sweep optical signal are opposite in sign, or the frequency-sweep slope of the first frequency-sweep optical signal is not 0 and the frequency-sweep slope of the second frequency-sweep optical signal is 0; and frequencies of the N frequency-sweep optical signals are different; and multiplexing the N frequency-sweep optical signals to obtain a radar transmit signal, splitting the radar transmit signal into a local oscillator signal and a detection signal, and transmitting the detection signal by using an antenna. Coherent detection is performed on the local oscillator signal and an echo signal of the detection signal, to obtain positioning information of a detected object.

In a possible design, the detection method may further include: receiving an echo signal of the detection signal from the antenna, and performing frequency mixing on the echo signal and the local oscillator signal, to generate a frequency mixed signal; and obtaining the positioning information of the detected object based on the frequency mixed signal.

In a possible design, the first frequency-sweep optical signal and the second frequency-sweep optical signal are periodic frequency-sweep optical signals.

In a possible design, a signal cycle of the first frequency-sweep optical signal is M times a signal cycle of the second frequency-sweep optical signal, or the signal cycle of the second frequency-sweep signal is M times the signal cycle of the first frequency-sweep optical signal, and M is a positive integer.

In a possible design, the signal cycle of the first frequency-sweep optical signal is K times a detection cycle of the lidar, or the signal cycle of the second frequency-sweep optical signal is K times the detection cycle of the lidar, and K is a positive integer.

In a possible design, in one target signal cycle, the frequency-sweep slope of the first frequency-sweep optical signal in the first time period and a frequency-sweep slope of the first frequency-sweep optical signal in a second time period are opposite in sign, and the frequency-sweep slope of the second frequency-sweep optical signal in the first time period and a frequency-sweep slope of the second frequency-sweep optical signal in the second time period are opposite in sign; and the frequency-sweep slope of the first frequency-sweep optical signal in the first time period is different from the frequency-sweep slope of the second frequency-sweep optical signal in the second time period, and the frequency-sweep slope of the second frequency-sweep optical signal in the first time period is different from the frequency-sweep slope of the first frequency-sweep optical signal in the second time period. The target signal cycle is a largest signal cycle between the signal cycle of the first frequency-sweep optical signal and the signal cycle of the second frequency-sweep optical signal.

In a possible design, a minimum frequency difference between the first frequency-sweep optical signal and the second frequency-sweep optical signal is related to a receiving bandwidth of the antenna.

In a possible design, the minimum frequency difference between the first frequency-sweep optical signal and the second frequency-sweep optical signal meets the following condition:

$$min(|f_1 - f_2|) > |fR_1| + |fR_2| + fOE$$

$f_1$ represents a frequency-sweep range of the first frequency-sweep optical signal, $f_2$ represents a frequency-sweep range of the second frequency-sweep optical signal, $fR_1$ represents a maximum value of a frequency shift amount of an echo signal of the first frequency-sweep optical signal relative to a local oscillator signal of the first frequency-sweep optical signal, $fR_2$ represents a maximum value of a frequency shift amount of an echo signal of the second frequency-sweep optical signal relative to a local oscillator signal of the second frequency-sweep optical signal, and $fOE$ represents the receiving bandwidth of the antenna.

In a possible design, the first frequency-sweep signal and the second frequency-sweep signal meet:

$$\mathrm{round}\left(\frac{2K_1 R_{min}}{c}\right) > \mathrm{round}\left(\frac{2K_2 R_{min}}{c}\right) \ or \ \mathrm{round}\left(\frac{2K_2 R_{min}}{c}\right) > \mathrm{round}\left(\frac{2K_1 R_{min}}{c}\right)$$

round( ) represents an operation of rounding to a nearest integer, $K_1$ represents the absolute value of the frequency-sweep slope of the first frequency-sweep signal in the first time period, $K_2$ represents the absolute value of the frequency-sweep slope of the second frequency-sweep signal in the first time period, $R_{min}$ represents a minimum detectable distance of the lidar, and c represents a light speed.

In a possible design, a waveform of the first frequency-sweep optical signal includes at least one of a triangular wave, a trapezoidal wave, and a sawtooth wave. When the frequency-sweep slope of the second frequency-sweep optical signal is not 0, a waveform of the second frequency-sweep optical signal includes at least one of a triangular wave, a trapezoidal wave, and a sawtooth wave.

In a possible design, wavelength change ranges of the N frequency-sweep optical signals are different, or polarization directions of the N frequency-sweep optical signals are different.

In this application, based on the implementations provided in the foregoing aspects, the implementations may be further combined to provide more implementations.

For beneficial effects of the second aspect and the third aspect, refer to the related descriptions of the first aspect.

BRIEF DESCRIPTION OF DRAWINGS

To describe the technical solutions in embodiments of this application more clearly, the following briefly describes the accompanying drawings for describing embodiments.

FIG. 1 is a diagram of an architecture of a lidar;
FIG. 2 is a diagram of a local oscillator signal, an echo signal, and a frequency mixed signal;
FIG. 3 is a diagram of a spectrum of a frequency mixed signal;
FIG. 4 is a diagram of a generated false target;
FIG. 5 is a diagram of waveforms of a frequency mixed signal;
FIG. 6 is a diagram of an architecture of a detection system of a lidar according to an embodiment of this application;
FIG. 7 is a diagram of waveforms of a frequency-sweep optical signal according to an embodiment of this application;
FIG. 8 is a diagram of waveforms of a first frequency-sweep optical signal and a second frequency-sweep optical signal according to an embodiment of this application;
FIG. 9 is a diagram of spectra of frequency mixed signals in a case of two detection targets according to an embodiment of this application;
FIG. 10 is a diagram of a distance-velocity solution principle according to an embodiment of this application;
FIG. 11 is a diagram of an output waveform of a frequency-sweep optical signal in a polarization multiplexing manner according to an embodiment of this application;
FIG. 12 is a diagram of a relationship between a detection cycle and a signal cycle according to an embodiment of this application;
FIG. 13 is a diagram of a structure of a receiving apparatus 620 according to an embodiment of this application;
FIG. 14 is a diagram of a structure of another receiving apparatus 620 according to an embodiment of this application;
FIG. 15A is a diagram of an architecture of a detection system according to an embodiment of this application;
FIG. 15B is a diagram of waveforms of two frequency-sweep optical signals and spectra of frequency mixed signals in a case of one detection target according to an embodiment of this application;
FIG. 16 is a diagram of an architecture of a detection system according to an embodiment of this application;
FIG. 17 is a diagram of an architecture of a detection system according to an embodiment of this application;

FIG. 18 is a diagram of an architecture of a detection system according to an embodiment of this application;
FIG. 19 is a diagram of an architecture of a detection system according to an embodiment of this application;
FIG. 20 is a diagram of a manner of generating a frequency-sweep drive signal source according to an embodiment of this application;
FIG. 21 is a diagram of an architecture of a detection system according to an embodiment of this application;
FIG. 22 is a diagram of a manner of generating a frequency-sweep drive signal source according to an embodiment of this application;
FIG. 23 is a diagram of an architecture of a detection system according to an embodiment of this application;
FIG. 24 is a diagram of an architecture of a detection system according to an embodiment of this application; and
FIG. 25 is a schematic flowchart of a detection method of a lidar according to an embodiment of this application.

**DESCRIPTION OF EMBODIMENTS**

The following describes in detail embodiments of this application with reference to accompanying drawings.
The following explains and describes some terms used in this application. It should be noted that the explanations are intended for ease of understanding by a person skilled in the art, but do not constitute a limitation on the protection scope claimed in this application.

(1) The term "at least one" in this application means one or more, that is, includes one, two, three, or more; and "a plurality of" means two or more, that is, includes two, three, or more. In addition, it should be understood that in description of this application, terms such as "first" and "second" are merely used for distinguishing and description, but should not be understood as indicating or implying relative importance, or should not be understood as indicating or implying a sequence. "And/or" describes an association relationship between associated objects, and represents that three relationships may exist. For example, A and/or B may represent the following cases: Only A exists, both A and B exist, and only B exists. A and B each may be singular or plural. The character "/" generally represents an "or" relationship between the associated objects. "At least one of the following items (pieces)" or a similar expression thereof refers to any combination of these items, including any combination of singular items (pieces) or plural items (pieces). For example, at least one of a, b, or c may represent: a, b, c, a-b, a-c, b-c, or a-b-c, where a, b, and c may be singular or plural.
(2) Frequency-sweep signal: The frequency-sweep signal is a signal whose frequency changes linearly with time.
(3) Frequency-sweep waveform: The frequency-sweep waveform is a trajectory of a frequency-sweep signal during frequency frequency-sweep.
(4) Frequency-sweep slope: The frequency-sweep slope is a frequency variation of a frequency-sweep signal in a unit time, measured in Hz/s.
Sign of a frequency-sweep slope: When a sign of the frequency-sweep slope is positive, a frequency increases with time. When a sign of the frequency-sweep slope is negative, a frequency decreases with time. When a sign of the frequency-sweep slope is zero, a frequency does not change with time. That two frequency-sweep slopes are opposite in sign means that a sign of one frequency-sweep slope is positive, and a sign of the other frequency-sweep slope is negative.
(5) Guard bandwidth: There is a specific frequency range between signals when frequency multiplexing is used for the signals. No signal is loaded in the frequency range to prevent interference between signals of different frequencies.
(6) Radar transmit signal: The radar transmit signal is a signal that is generated by one or more frequency-sweep signals and that can be transmitted by a transmit antenna after frequency multiplexing. The radar transmit signal is usually an optical signal.
(7) Echo signal: The echo signal is a reflected signal after a transmit signal reaches a detected object. The echo signal is usually an optical signal.
(8) Minimum detectable distance of a lidar: Some lidars have blind areas, and an object that is relatively close to the lidar cannot be detected, for example, 1m. A minimum distance of the blind area is the minimum detectable distance of the lidar. Some lidars do not have blind areas. However, because some objects are relatively close to the lidar, due to a limitation of processor precision or an algorithm, after the lidar transmits a detection signal, and a relatively close object transmits an echo signal, the lidar cannot accurately locate an accurate position of the object by using the echo signal. Therefore, a minimum distance that can be accurately located is the minimum detectable distance of the lidar.

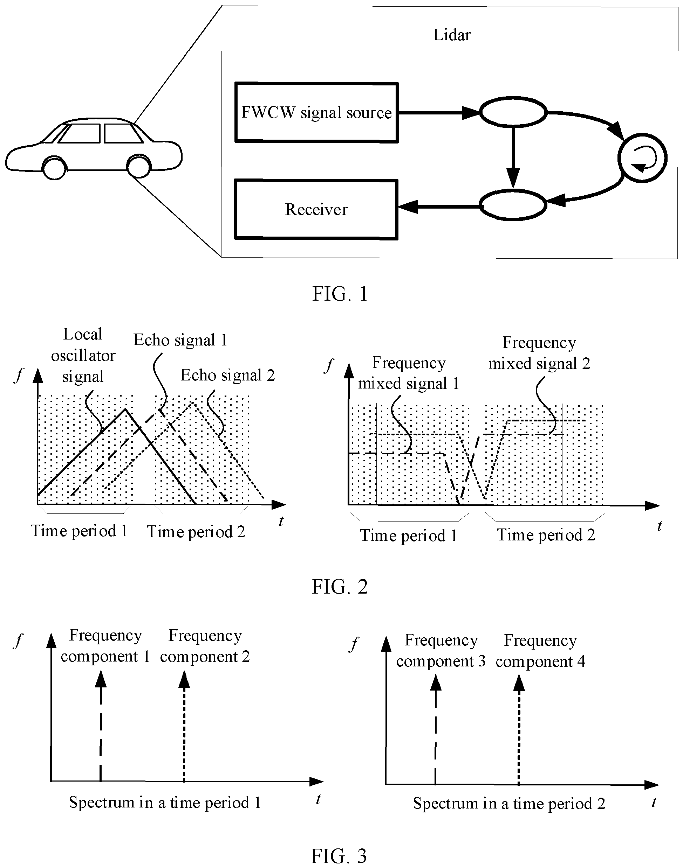

This application is applied to a lidar. The lidar can be installed on a vehicle, ship or another machine. Refer to FIG. 1. The lidar transmits a frequency-sweep optical signal by using a frequency-sweep signal source, the frequency-sweep optical signal is reflected by a detected object after being irradiated to the detected object, and a reflected echo signal may be received by a receiving end of the lidar. In this case, the receiving end of the lidar causes the echo signal to beat with a local oscillator signal, to generate one intermediate frequency signal that varies with a distance and a velocity of the detected object, and may calculate the distance, the velocity, a reflectivity, and other information of the detected object based on a frequency of the intermediate frequency signal.

As described in the background, for a relatively distant object, a light spot of the lidar diverges, so that an emitted optical signal generates echo signals of a plurality of detection targets. FIG. 2 uses two detection targets as an example. A plurality of frequency mixed signals are generated after coherent detection is performed on two echo signals and a local oscillator signal. As shown in FIG. 2, coherent detection is performed on an echo signal 1 and the local oscillator signal, to generate a frequency mixed signal 1; and coherent detection is performed on an echo signal 2 and the local oscillator signal, to generate a frequency mixed signal 2. It can be seen from FIG. 2 that time may be divided into a time period 1 and a time period 2. Frequency-sweep slopes of a transmit signal or the echo signal are different in different time periods. Fourier transform is separately performed on a signal in the time period 1 and the time period 2, to obtain a spectrum diagram shown in FIG. 3. When there is only the echo signal 1, in FIG. 3, a signal spectrum in the time period 1 has only a frequency component 1, and a signal spectrum in the time period 2 has only a frequency component 3.

Further, a distance-related frequency and a velocity-related frequency of the detection target may be determined based on the frequency component 1 and a frequency component 2 in the time period 1, and the frequency component 3 and a frequency component 4 in the time period 2. Then, the distance of the detection target is further calculated based on the distance-related frequency, and the velocity of the detection target is calculated based on the velocity-related frequency. Because there are two frequency components in the time period 1 and two frequency components in the time period 2, distances and velocities of four detection targets may be obtained through calculation based on combination.

An IQ receiver is used as an example. A relationship among a frequency component in the time period 1, a frequency component in the time period 2, the distance-related frequency, and the velocity-related frequency satisfies Formula (1):

$$f_1 = -f_R + f_D; f_2 = f_R + f_D \qquad\qquad \text{Formula (1)}$$

$f_1$ represents the frequency component in the time period 1, $f_2$ represents the frequency component in the time period 2, $f_R$ represents the distance-related frequency, and $f_D$ represents the velocity-related frequency.

Further, $f_R$ and $f_D$ may be calculated by using Formula (2):

$$f_D = \frac{f_1 + f_2}{2}; \ f_R = \frac{f_2 - f_1}{2} \qquad\qquad \text{Formula (2)}$$

The distance of the detection target may be determined by using Formula (3), and the velocity of the detection target may be determined by using Formula (4):

$$R = \frac{cT}{2B} f_R \qquad\qquad \text{Formula (3)}$$

$R$ represents the distance between the detection target and the lidar, and $B$ represents a frequency-sweep bandwidth of a transmit optical signal.

$c$ is a light speed, and $T$ is one time period, for example, the time period 1 or the time period 2.

$$V = \frac{\lambda}{2} f_D \qquad\qquad \text{Formula (4)}$$

$\lambda$ represents an optical wavelength, and $V$ represents the moving velocity of the detection target.

In this case, a relationship among V, R, $f_1$, and $f_2$ may be determined by using Formula (2) to Formula (4). For details, refer to Formula (5):

$$V = \frac{BR\lambda}{cT} + \frac{\lambda}{2} f_1; \ V = -\frac{BR\lambda}{cT} + \frac{\lambda}{2} f_2 \qquad\qquad \text{Formula (5)}$$

For determining a curve of the relationship among the velocity V, the distance R, $f_1$, and $f_2$ with reference to

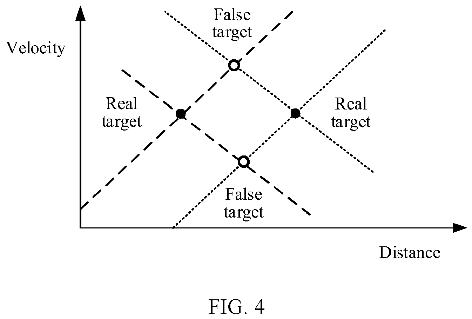

Formula (5), refer to FIG. 4. It can be seen from FIG. 4 that two specific components from the frequency mixed signal 1 and two specific components from the frequency mixed signal 2 cannot be distinguished in the frequency components 1 to 4. Therefore, accurate information of the two detection targets cannot be obtained. It should be understood that, when an I receiver or a Q receiver is used, a plurality of detection targets cannot be distinguished either.

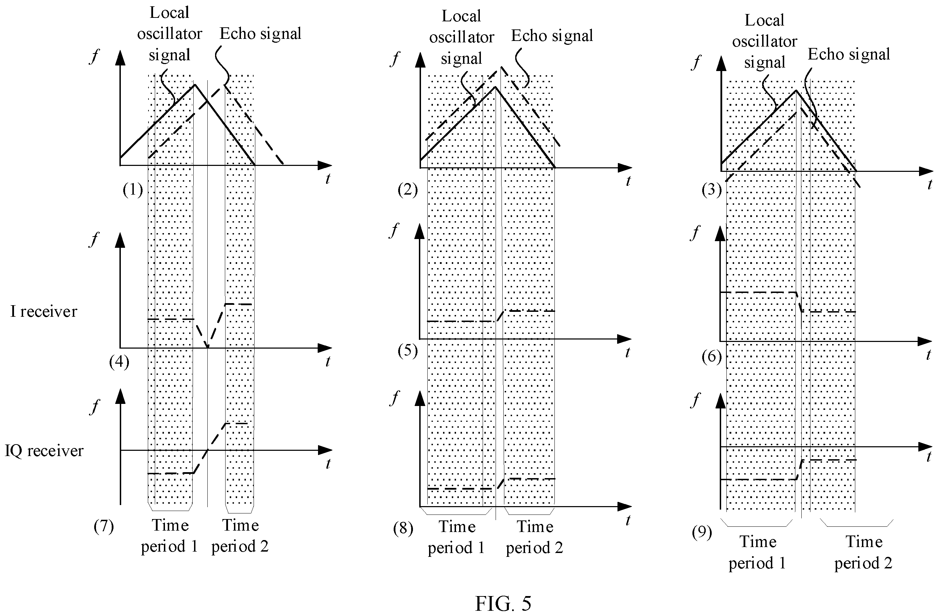

In some scenarios, when the I receiver or the Q receiver is used, a moving velocity of a specific detection target is relatively high, and velocity ambiguity may occur during calculation of the velocity of the detection target. For example, (1) to (3) in FIG. 5 are diagrams of frequency changes of a local oscillator signal and an echo signal in three possible cases. In a first possible case shown in (1) in FIG. 5, when the I receiver or the Q receiver is used for detection, for a frequency mixed signal in the time period 1 and a frequency mixed signal in the time period 2, refer to (4) in FIG. 5. When the IQ receiver is used for detection, the frequency mixed signal in the time period 1 and the frequency mixed signal in the time period 2 may be shown in (7) in FIG. 5. The IQ receiver can distinguish between positive and negative frequencies during detection. When the I receiver or the Q receiver is used for detection, the I receiver or the Q receiver cannot distinguish between the positive and negative frequencies. Therefore, the relationship among the frequency component in the time period 1, the frequency component in the time period 2, the distance-related frequency, and the velocity-related frequency should theoretically meet a condition shown in Formula (6):

$$f_1 = f_R - f_D; f_2 = f_R + f_D \qquad \text{Formula (6)}$$

In a second possible case shown in (2) in FIG. 5, when the I receiver or the Q receiver is used for detection, for a frequency mixed signal in the time period 1 and a frequency mixed signal in the time period 2, refer to (5) in FIG. 5. When the IQ receiver is used for detection, the frequency mixed signal in the time period 1 and the frequency mixed signal in the time period 2 may be shown in (8) in FIG. 5. The IQ receiver can distinguish between positive and negative frequencies during detection. When the I receiver or the Q receiver is used for detection, the I receiver or the Q receiver cannot distinguish between the positive and negative frequencies. Therefore, the relationship among the frequency component in the time period 1, the frequency component in the time period 2, the distance-related frequency, and the velocity-related frequency should theoretically meet a condition shown in Formula (7):

$$f_1 = -f_R + f_D; f_2 = f_R + f_D \qquad \text{Formula (7)}$$

In a third possible case shown in (3) in FIG. 5, when the I receiver or the Q receiver is used for detection, for a frequency mixed signal in the time period 1 and an actual frequency mixed signal in the time period 2, refer to (6) in FIG. 5. When the IQ receiver is used, the frequency mixed signal in the time period 1 and the frequency mixed signal in the time period 2 may be shown in (9) in FIG. 5. The IQ receiver can distinguish between positive and negative frequencies during detection. When the I receiver or the Q receiver is used for detection, the I receiver or the Q receiver cannot distinguish between the positive and negative frequencies. Therefore, the relationship among the frequency component in the time period 1, the frequency component in the time period 2, the distance-related frequency, and the velocity-related frequency should theoretically meet a condition shown in Formula (8):

$$f_1 = f_R - f_D; f_2 = -f_R - f_D \qquad \text{Formula (8)}$$

Based on this, when the I receiver or the Q receiver is used for detection, if the frequencies $f_1$ and $f_2$ are calculated in the manner shown in Formula (6), a calculation result may be inconsistent with an actual frequency of the frequency mixed signal, resulting in inaccurate calculation of the velocity and distance. If the frequencies $f_1$ and $f_2$ are separately calculated by using the manners shown in Formulas (6), (7), and (8), it is impossible to distinguish an accurate calculation result.

Based on this, this application provides a sending apparatus, measurement apparatus, and detection method of a lidar, so that simultaneous detection of a plurality of targets is implemented without increasing detection duration and a detection result is relatively accurate. Even if an I receiver or a Q receiver is used, velocity ambiguity does not occur. In embodiments of this application, a detected object is also referred to as a reflector, and the detected object may be any object in a scanning direction of an antenna, for example, may be a person, a mountain, a vehicle, a tree, or a bridge. An antenna in embodiments of this application includes a transmit antenna for transmitting an optical signal and a receive antenna for receiving an optical signal, and may also be referred to as a scanner, configured to transmit an optical signal and receive an optical signal.

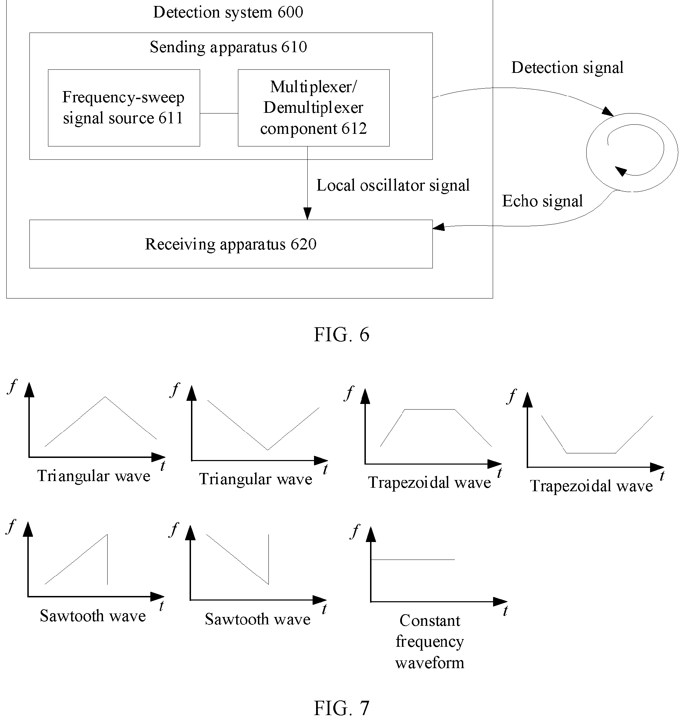

FIG. 6 is a diagram of a structure of a detection system of a lidar. The detection system 600 includes a sending apparatus 610 and a receiving apparatus 620. The detection system may be used in a ranging device or a speed measuring device, for example, may be used in an FMCW lidar, a laser speedometer, a laser rangefinder, an optical coherence tomography (optical coherence tomography, OCT) device, or an optical frequency domain reflectometer (optical frequency domain reflectometer, OFDR) device.

The sending apparatus 610 may include a frequency-sweep signal source 611 and a multiplexer/demultiplexer component 612. The frequency-sweep signal source 611 transmits N frequency-sweep optical signals. N is an integer greater than 1. The frequency-sweep signal source may be generated through direct modulation (also referred to as internal modulation) of a laser, or may be generated by performing external modulation by a modulator on an optical signal generated by a laser. A structure that may be used by the frequency-sweep signal source is described below in detail, and details are not described herein.

The N frequency-sweep signals include at least two frequency-sweep optical signals with different frequency-sweep waveforms. Frequency ranges of the N frequency-sweep optical signals are different. For ease of distinguishing, the two frequency-sweep signals are referred to as a first frequency-sweep optical signal and a second frequency-sweep optical signal.

In a first possible implementation, the first frequency-sweep optical signal and the second frequency-sweep optical signal meet at least the following condition 1 and condition 2:

Condition 1: There is at least a time period in which a frequency-sweep slope of the first frequency-sweep optical signal and a frequency-sweep slope of the second frequency-sweep optical signal are opposite in sign. The time period is referred to as a first time period in this specification. It may be understood that, the frequency-sweep slope of the first frequency-sweep optical signal and the frequency-sweep slope of the second frequency-sweep optical signal are opposite in sign in the first time period.

Condition 2: An absolute value of a frequency-sweep slope of the first frequency-sweep optical signal is different from an absolute value of a frequency-sweep slope of the second frequency-sweep optical signal in the first time period.

In a second possible implementation, the first frequency-sweep optical signal and the second frequency-sweep optical signal meet the following condition 3:

Condition 3: There is a specific time period in which a frequency-sweep slope of one of the first frequency-sweep optical signal and the second frequency-sweep optical signal is 0, and a frequency-sweep slope of the other frequency-sweep optical signal is not 0. For example, in a first time period, a frequency-sweep slope of the first frequency-sweep optical signal is 0, and a frequency-sweep slope of the second frequency-sweep optical signal is not 0. Alternatively, in a first time period, a frequency-sweep slope of the first frequency-sweep optical signal is not 0, and a frequency-sweep slope of the second frequency-sweep optical signal is 0.

In some possible embodiments, the N frequency-sweep optical signals further meet at least one of the following conditions 4 to 7.

Condition 4: All of the N frequency-sweep optical signals are periodic frequency-sweep optical signals, or a specific frequency-sweep optical signal is a constant frequency signal, that is, a frequency-sweep slope of the frequency-sweep optical signal is 0. In some embodiments, signal cycles of the N frequency-sweep optical signals meet a multiple relationship, and the signal cycles may be alternatively multiplied by 1, that is, the signal cycles of the frequency-sweep optical signals are equal. The first frequency-sweep optical signal and the second frequency-sweep optical signal are used as an example. Both the first frequency-sweep optical signal and the second frequency-sweep optical signal are periodic frequency-sweep optical signals. For example, signal cycles of the first frequency-sweep optical signal and the second frequency-sweep optical signal meet a multiple relationship. For example, a signal cycle of the first frequency-sweep optical signal is M times a signal cycle of the second frequency-sweep optical signal, or the signal cycle of the second frequency-sweep optical signal is M times the signal cycle of the first frequency-sweep optical signal. M may be 1, or may be an integer greater than 1.

Condition 5: In one target signal cycle, there are two time periods in which a frequency-sweep slope of the first frequency-sweep optical signal and a frequency-sweep slope of the second frequency-sweep optical signal are opposite in sign. That is, it may be understood that, in addition to the first time period in which the frequency-sweep slope of the first frequency-sweep optical signal and the frequency-sweep slope of the second frequency-sweep optical signal are opposite in sign, there is at least one time period in which a frequency-sweep slope of the first frequency-sweep optical signal and a frequency-sweep slope of the second frequency-sweep optical signal are opposite in sign. For ease of distinguishing, the time period other than the first time period is referred to as a second time period. The target signal cycle herein is a largest value between a signal cycle of the first frequency-sweep optical signal and a signal cycle of the second frequency-sweep optical signal. For example, the signal cycle of the first frequency-sweep optical signal is greater than or equal to the signal cycle of the second frequency-sweep signal. In the signal cycle of the first frequency-sweep optical signal, the frequency-sweep slope of the first frequency-sweep signal in the first time period and the frequency-sweep slope of the first frequency-sweep signal in the second time period are opposite in sign; the frequency-sweep slope of the second frequency-sweep signal in the first time period and the frequency-sweep slope of the second frequency-sweep signal in the second time period are opposite in sign; the frequency-sweep slope of the first frequency-sweep signal in the first time period is different from the frequency-sweep slope of the second frequency-sweep signal in the second time period; and the frequency-sweep slope of the second frequency-sweep signal in the first time period is different from the frequency-sweep slope of the first frequency-sweep signal in the second time period.

Condition 6: There is a guard bandwidth between two frequency-sweep optical signals that are contiguous in frequency in the N frequency-sweep optical signals. Setting of the guard bandwidth is related to a receiving bandwidth of an antenna. The first frequency-sweep optical signal and the second frequency-sweep optical signal are used as an example. The first frequency-sweep optical signal and the second frequency-sweep optical signal are two frequency-sweep optical signals between which a frequency difference is the smallest in the N frequency-sweep optical signals. A minimum frequency difference between the first frequency-sweep optical signal and the second frequency-sweep optical signal is related to the receiving bandwidth of the antenna.

For example, the minimum frequency difference between the first frequency-sweep optical signal and the second frequency-sweep optical signal meets a condition shown in Formula (9):

$$min(|f_1 - f_2|) > |fR_1| + |fR_2| + fOE \qquad \text{Formula (9)}$$

$f_1$ represents a frequency-sweep range of the first frequency-sweep optical signal, $f_2$ represents a frequency-sweep range of the second frequency-sweep optical signal, $fR_1$ represents a maximum value of a frequency shift amount of an echo signal of the first frequency-sweep optical signal relative to a local oscillator signal of the first frequency-sweep optical signal, $fR_2$ represents a maximum value of a frequency shift amount of an echo signal of the second frequency-sweep optical signal relative to a local oscillator signal of the second frequency-sweep optical signal, and $fOE$ represents the receiving bandwidth of the antenna.

Condition 7: A frequency-sweep slope of the first frequency-sweep optical signal and a frequency-sweep slope of the second frequency-sweep optical signal meet a condition shown in Formula (10):

$$\text{round}\left(\frac{2K_1 R_{min}}{c}\right) > \text{round}\left(\frac{2K_2 R_{min}}{c}\right) \ \text{or} \ \text{round}\left(\frac{2K_2 R_{min}}{c}\right) > \text{round}\left(\frac{2K_1 R_{min}}{c}\right) \quad \text{Formula (10)}$$

round(() represents an operation of rounding to a nearest integer, $K_1$ represents the absolute value of the frequency-sweep slope of the first frequency-sweep signal in the first time period, $K_2$ represents the absolute value of the frequency-sweep slope of the second frequency-sweep signal in the first time period, $R_{min}$ represents a minimum detectable distance of the lidar, and c represents a light speed.

For example, in this embodiment of this application, conditions that the N frequency-sweep optical signals meet may include a plurality of combinations of the foregoing conditions. For example, the N frequency-sweep optical signals meet the condition 1+the condition 2 + the condition 6 + the condition 7. For another example, the N frequency-sweep optical signals meet the condition 3 + the condition 6 + the condition 7. For another example, the N frequency-sweep optical signals meet the condition 1 + the condition 2 + the condition 4 + the condition 5 + the condition 6 + the condition 7. For another example, the N frequency-sweep optical signals meet the condition 1 + the condition 2 + the condition 5 + the condition 6 + the condition 7. Other examples are not enumerated one by one herein.

In some embodiments, each periodic signal among the N frequency-sweep optical signals in this application may use various frequency-sweep waveforms with frequencies changing linearly with time, such as a triangular wave, a trapezoidal wave, and a sawtooth wave, or any combination of the foregoing waveforms. In some other embodiments, some frequency-sweep optical signals may use a constant frequency waveform, that is, a frequency-sweep slope is 0. FIG. 7 shows examples of frequency-sweep waveforms.

The multiplexer/demultiplexer component 612 multiplexes the N frequency-sweep optical signals to obtain a radar transmit signal, demultiplex the radar transmit signal to obtain a local oscillator signal and a detection signal, transmits the detection signal by using the antenna, and sends the local oscillator signal to the receiving apparatus 620 of the lidar.

The receiving apparatus 620 receives the local oscillator signal from the sending apparatus 610 and an echo signal of the detection signal sent by the sending apparatus 610, performs frequency mixing on the echo signal and the local oscillator signal to generate a frequency mixed signal, and then obtains positioning information of a detected object based on the frequency mixed signal. For example, the positioning information includes information such as a velocity of the detected object, a distance from the lidar, and a reflectivity.

In some embodiments, the N frequency-sweep optical signals may be multiplexed in a frequency multiplexing manner or a polarization multiplexing manner. It should be noted that, in the polarization multiplexing manner, there is no requirement on the guard bandwidth described in the foregoing condition 6 for the N frequency-sweep optical signals.

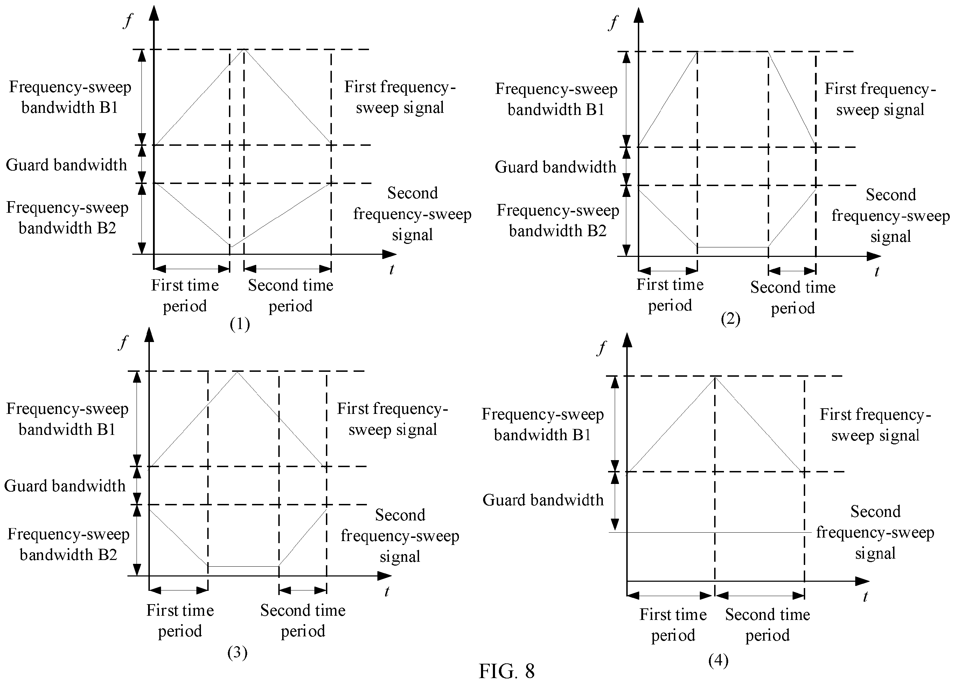

The first frequency-sweep optical signal and the second frequency-sweep optical signal are used as an example. The first frequency-sweep optical signal and the second frequency-sweep optical signal are multiplexed in the frequency multiplexing manner before transmission. Several possible frequency-sweep waveforms of the two frequency-sweep optical signals are described with reference to FIG. 8. (1) to (3) in FIG. 8 use an example in which a frequency-sweep bandwidth of the first frequency-sweep optical signal is B1 and a frequency-sweep bandwidth of the second frequency-sweep optical signal is B2. There is a guard bandwidth between the first frequency-sweep optical signal and the second frequency-sweep optical signal. There are at least two time periods in which the frequency-sweep slope of the first frequency-sweep optical signal and the frequency-sweep slope of the second frequency-sweep optical signal are opposite in sign. In (1) to (3) in FIG. 8, in the first time period, the frequency-sweep slope of the first frequency-sweep optical signal and the frequency-sweep slope of the second frequency-sweep optical signal are opposite in sign, and the absolute values of the frequency-sweep slopes are not equal. In the second time period, the frequency-sweep slope of the first frequency-sweep optical signal and the frequency-sweep slope of the second frequency-sweep optical signal are opposite in sign, and the absolute values of the frequency-sweep slopes are not equal. The frequency-sweep slope of the first frequency-sweep optical signal in the first time period is different from the frequency-sweep slope of the second frequency-sweep optical signal in the second time period, and the frequency-sweep slope of the second frequency-sweep optical signal in the first time period is different from the frequency-sweep slope of the first frequency-sweep optical signal in the second time period.

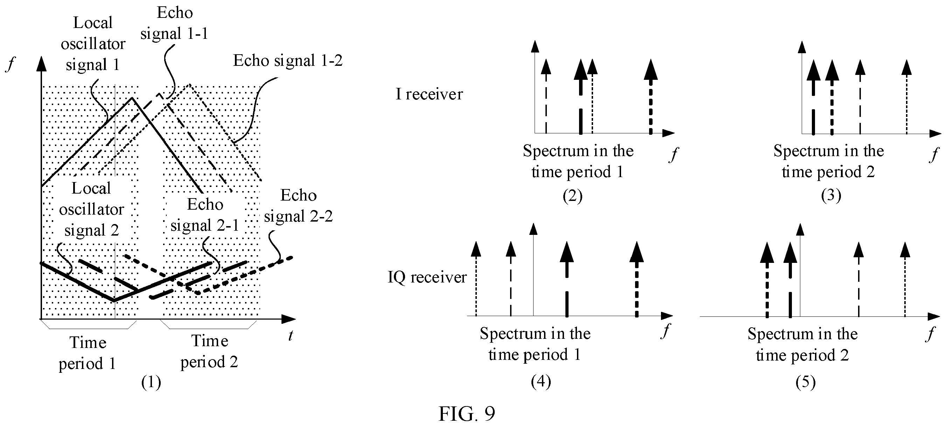

The first frequency-sweep optical signal and the second frequency-sweep optical signal shown in (1) in FIG. 8 are used as an example to describe effect of accurately obtaining positioning information of a plurality of targets. Refer to FIG. 9. Two detection targets are used as an example. A local oscillator signal 1 of the first frequency-sweep optical signal separately corresponds to two echo signals: an echo signal 1-1 and an echo signal 1-2. A local oscillator signal 2 of the second frequency-sweep optical signal separately corresponds to two echo signals: an echo signal 2-1 and an echo signal 2-2. For a spectrum of a frequency mixed signal generated by the local oscillator signal 1 beating with the echo signal 1-1 and the echo signal 1-2 in a time period 1, and a spectrum of a frequency mixed signal generated by the local oscillator signal 2 beating with the echo signal 2-1 and the echo signal 2-2 in the time period 1, refer to a spectrum, shown in (2) in FIG. 9, that is of a frequency mixed signal and that exists when an I receiver is used, and a spectrum, shown in (4) in FIG. 9, that is of a frequency mixed signal and that exists when an IQ receiver is used. For a spectrum of a frequency mixed signal generated by the local oscillator signal 1 beating with the echo signal 1-1 and the echo signal 1-2 in a time period 2, and a spectrum of a frequency mixed signal generated by the local oscillator signal 2 beating with the echo signal 2-1 and the echo signal 2-2 in the time period 2, refer to a spectrum, shown in (3) in FIG. 9, that is of a frequency mixed signal and that exists when the I receiver is used, and a spectrum, shown in (5) in FIG. 9, that is of a frequency mixed signal and that exists when the IQ receiver is used.

In some embodiments, when the IQ receiver is used, a velocity and a distance of the detection target may be determined according to Formula (2) to Formula (4).

In some other embodiments, when the I receiver or a Q receiver is used, a velocity and a distance of the detection target may be calculated according to Formula (6) to Formula (8) with reference to Formula (3) and Formula (4) respectively. In this embodiment of this application, a plurality of frequency-sweep optical signals are used for detection. Therefore, for a frequency mixed signal obtained by performing frequency mixing on each frequency-sweep optical signal and a local oscillator signal, the velocity and the distance of the detection target may be calculated according to Formula (6) to Formula (8) with reference to Formula (3) and Formula (4).

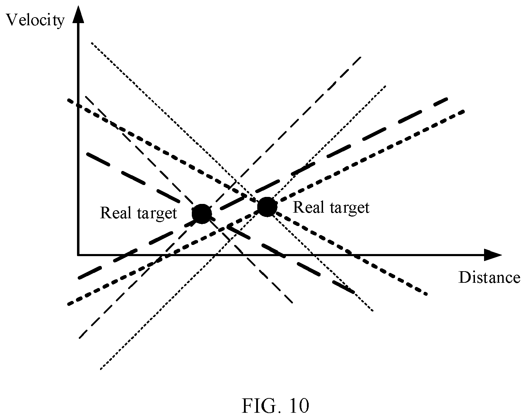

Frequency-sweep optical signals with different slopes are introduced. Therefore, in this case, for a real target, coherent detection is performed in two time periods separately corresponding to the different frequency-sweep optical signals. A distance and a velocity of the real target that are obtained through calculation by using the different frequency-sweep optical signals do not change, but a distance and a velocity of a false target change. Therefore, as shown in FIG. 10, velocities and distances corresponding to intersection points of four lines are velocities and distances of real targets. In this embodiment of this application, the frequency-sweep signals with different slopes are multiplexed through frequency multiplexing to form transmit signals, and the transmit signals are used to detect M detected objects. In this way, a false target can be excluded without increasing detection time.

When there is a specific guard bandwidth in frequency domain between the different frequency-sweep optical signals (that is, if the condition 6 is met), a beat frequency signal that is not needed can be prevented from being generated. Therefore, this can avoid a calculation error, and reduce complexity of calculating the velocity or the distance. In this embodiment of this application, the transmit signals are formed through transmit frequency multiplexing, so that the plurality of targets are distinguished without increasing the measurement time, and a lidar point rate remains unchanged. In addition, in this embodiment of this application, the I receiver, the Q receiver, or the IQ receiver can be used. When the I receiver or the Q receiver is used, the plurality of frequency-sweep optical signals are multiplexed through frequency multiplexing to form the transmit signals. Because a distance and a velocity of a real target do not change, a local oscillator signal of each frequency-sweep optical signal may beat with an echo signal of each frequency-sweep optical signal to calculate a frequency mixed signal, and then a frequency component of a distance and a frequency component of a velocity are determined according to each of Formula (6) to Formula (8). That is, three calculation results may be obtained based on each frequency-sweep optical signal. Two frequency-sweep optical signals are used as an example. Two same results in calculation results of the two frequency-sweep optical signals are final calculation results. This can resolve an existing problem of velocity ambiguity occurring when the I receiver or the Q receiver is used for detection. In addition, compared with using the IQ receiver, using the I receiver or the Q receiver can reduce costs.

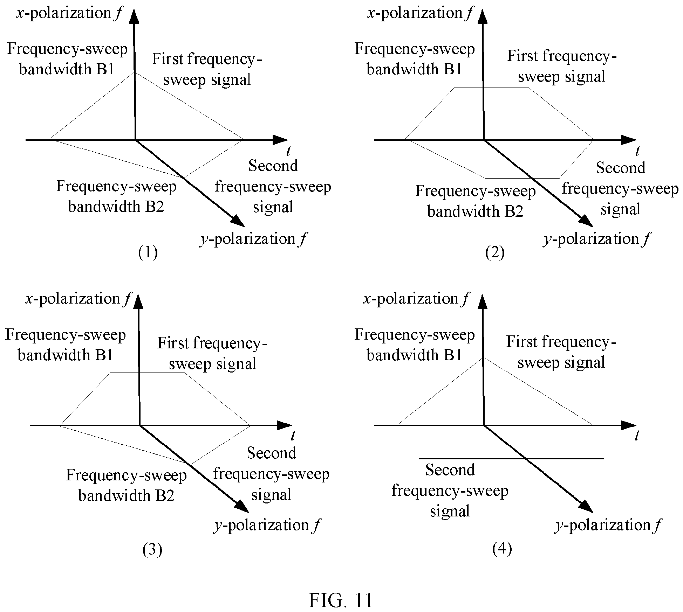

The first frequency-sweep optical signal and the second frequency-sweep optical signal are used as another example. The first frequency-sweep optical signal and the second frequency-sweep optical signal are multiplexed in the polarization multiplexing manner before transmission. Several possible frequency-sweep waveforms of the two frequency-sweep optical signals are described with reference to FIG. 11. (1) to (3) in FIG. 11 use an example in which a frequency-sweep bandwidth of the first frequency-sweep optical signal is B1 and a frequency-sweep bandwidth of the second frequency-sweep optical signal is B2. There are at least two time periods in which the frequency-sweep slope of the first frequency-sweep optical signal and the frequency-sweep slope of the second frequency-sweep optical signal are opposite in sign. In (1) to (3) in FIG. 11, in the first time period, the frequency-sweep slope of the first frequency-sweep optical signal and the frequency-sweep slope of the second frequency-sweep optical signal are opposite in sign, and the absolute values of the frequency-sweep slopes are not equal. In the second time period, the frequency-sweep slope of the first frequency-sweep optical signal and the frequency-sweep slope of the second frequency-sweep optical signal are opposite in sign, and the absolute values of the frequency-sweep slopes are not equal. The frequency-sweep slope of the first frequency-sweep optical signal in the first time period is different from the frequency-sweep slope of the second frequency-sweep optical signal in the second time period, and the frequency-sweep slope of the second frequency-sweep optical signal in the first time period is different from the frequency-sweep slope of the first frequency-sweep optical signal in the second time period.

In the foregoing solution, the frequency-sweep optical signals with different slopes are multiplexed in the polarization multiplexing manner to form transmit signals, and the transmit signals are used to detect M detected objects. In this way, a false target can be excluded without increasing measurement time, and a point rate of the lidar remains unchanged. In addition, the I receiver, the Q receiver, or the IQ receiver can be used. When the I receiver or the Q receiver is used, the plurality of frequency-sweep optical signals are multiplexed through frequency multiplexing to form the transmit signals. Because a distance and a velocity of a real target do not change, a local oscillator signal of each frequency-sweep optical signal may beat with an echo signal of each frequency-sweep optical signal to calculate a frequency mixed signal, and then a frequency component of a distance and a frequency component of a velocity are determined according to each of Formula (6) to Formula (8). That is, three calculation results may be obtained based on each frequency-sweep optical signal. Two frequency-sweep optical signals are used as an example. Two same results in calculation results of the two frequency-sweep optical signals are final calculation results. This can resolve an existing problem of velocity ambiguity occurring when the I receiver or the Q receiver is used for detection. In addition, compared with using the IQ receiver, using the I receiver or the Q receiver can reduce costs.

In some possible implementations, to improve detection efficiency and reduce the detection time, the signal cycle of the frequency-sweep optical signal is K times a detection cycle of the lidar. The signal cycle of the frequency-sweep optical signal herein may be a largest signal cycle of the signal cycles of the N frequency-sweep optical signals. K is a positive integer. The detection cycle means a time period for obtaining positioning information of the detected object once.

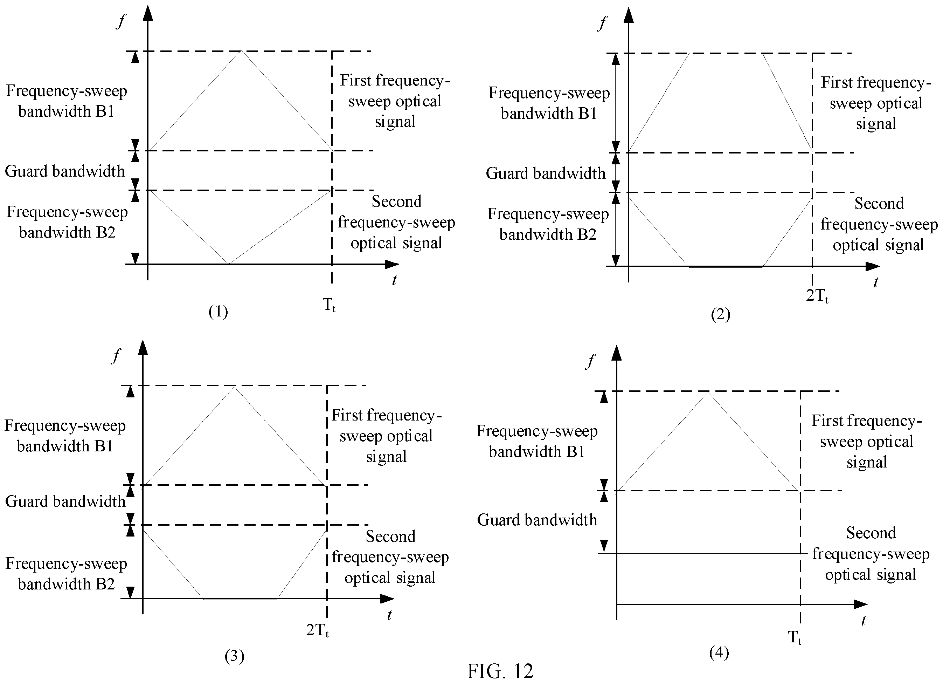

The first frequency-sweep optical signal and the second frequency-sweep optical signal are used as an example. Refer to FIG. 12. The frequency-sweep bandwidth of the first frequency-sweep optical signal is different from the frequency-sweep bandwidth of the second frequency-sweep optical signal. The following uses an example in which the signal cycles of the first frequency-sweep optical signal and the second frequency-sweep optical signal are the same. In FIG. 12, T represents the detection cycle. In (1) in FIG. 12, both the first frequency-sweep optical signal and the second frequency-sweep optical signal are triangular waves, and the signal cycle is equal to the detection cycle. In (2) in FIG. 12, both the first frequency-sweep optical signal and the second frequency-sweep optical signal are trapezoidal waves, and the signal cycle is twice the detection cycle. In (3) in FIG. 12, the first frequency-sweep optical signal is a triangular wave, the second frequency-sweep optical signal is a trapezoidal wave, and the signal cycle is twice the detection cycle. In (4) in FIG. 12, the first frequency-sweep optical signal is a triangular wave, the second frequency-sweep optical signal is a constant frequency wave, and the signal cycle is equal to the detection cycle. FIG. 12 is merely used to describe an example of a multiple relationship between the signal cycle and the detection cycle. In a specific scenario, the multiple relationship may be configured based on a requirement. This is not specifically limited in this embodiment of this application.

The following describes possible structures of the sending apparatus 610 and the receiving apparatus 620 in this embodiment of this application with reference to the accompanying drawings, to provide examples of several implementations.

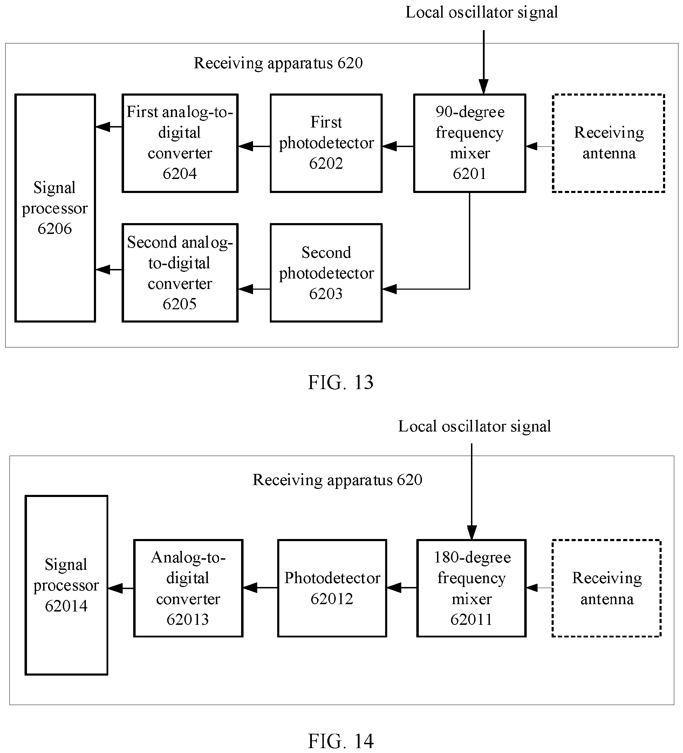

In this embodiment of this application, one or more IQ receivers, an I receiver, or a Q receiver may be deployed in the receiving apparatus 620. As an example, FIG. 13 is a diagram of a possible structure of an IQ receiver. The IQ receiver includes a 90-degree frequency mixer 6201, a first photodetector 6202, a second photodetector 6203, a first analog-to-digital converter 6204, a second analog-to-digital converter 6205, and a signal processor 6206. For example, the receiving apparatus 620 may further include a receive antenna, and the receive antenna may alternatively be located outside the receiving apparatus 620. It should be noted that the receiving apparatus 620 may further include another component. This is not specifically limited in this application. A structure of an IQ receiver that can perform IQ detection is applicable to this embodiment of this application.

The 90-degree frequency mixer 6201 receives an echo signal from the antenna. The received echo signal includes echo signals separately corresponding to N frequency-sweep optical signals. When there are a plurality of detected objects, each frequency-sweep optical signal corresponds to a plurality of echo signals. The 90-degree frequency mixer 6201 further receives a local oscillator signal from the sending apparatus 610. The received local oscillator signal includes local oscillator signals separately corresponding to the N frequency-sweep optical signals. The 90-degree frequency mixer 6201 performs frequency mixing on the local oscillator signal and the echo signal, and outputs two optical signals: an I component optical signal and a Q component optical signal. The first photodetector 6202 performs optoelectronic detection on the I component optical signal, and converts the I component optical signal into a first analog electrical signal. The second photodetector 6203 performs optoelectronic detection on the Q component optical signal, and converts the Q component optical signal into a second analog electrical signal. The first analog-to-digital converter 6204 samples the first analog electrical signal, and converts the first analog electrical signal into a first digital signal. The second analog-to-digital converter 6205 samples the second analog electrical signal, and converts the second analog signal into a second digital signal. Further, the signal processor 6206 processes the first digital signal and the second digital signal, to obtain positioning information of the detected object. For example, the first photodetector 6202 and the second photodetector 6203 may use a single-ended photodetector or a balanced photodetector (balanced photodetector, BPD).

The signal processor 6206 may include a device with a calculation capability, like a digital signal processor (digital signal processor, DSP), a central processing unit (CPU), an acceleration processing unit (APU), an image processing unit (GPU), a microprocessor, or a microcontroller. The signal processor 6206 is configured to process the digital signal obtained through sampling, to obtain the positioning information such as a velocity and a distance of the detected target object.

In this embodiment of this application, an operation of processing the digital signal obtained through sampling to obtain the information such as the velocity and the distance of the target object may be completed by one or more signal processors 6206, for example, may be completed by one or more DSPs, or may be completed by one or more signal processors 6206 in combination with another component, for example, may be jointly completed by one DSP in combination with one or more central processing units CPUs. When processing the digital signal obtained through sampling, the signal processor 6206 may specifically invoke a computer program stored in a computer-readable storage medium. The computer-readable storage medium includes but is not limited to a random access memory (random access memory, RAM), a read-only memory (read only memory, ROM), an erasable programmable read-only memory (erasable programmable read only memory, EPROM), or a compact disc read-only memory (compact disc read-only memory, CD ROM), and may be configured in the signal processor 6206, or may be independent of the signal processor 6206.

In another example, FIG. 14 is a diagram of a possible structure of an I receiver. The I receiver includes a 180-degree frequency mixer 62011, a photodetector 62012, an analog-to-digital converter (analog digital converter, ADC) 62013, and a signal processor 62014. The 180-degree frequency mixer 62011 performs frequency mixing on a local oscillator signal and an echo signal, and outputs an I component optical signal. The photodetector 62012 performs photoelectric detection on the I component optical signal, to obtain an analog electrical signal. The analog-to-digital converter 62013 converts the analog electrical signal into a digital signal. Further, the signal processor 62014 processes the digital signal, to obtain positioning information of a detected object. For example, the receiving apparatus 620 may further include a receive antenna, and the receive antenna may alternatively be located outside the receiving apparatus 620. It should be noted that the receiving apparatus 620 may further include another component. This is not specifically limited in this application. A structure of an I receiver that can perform I detection is applicable to this embodiment of this application.

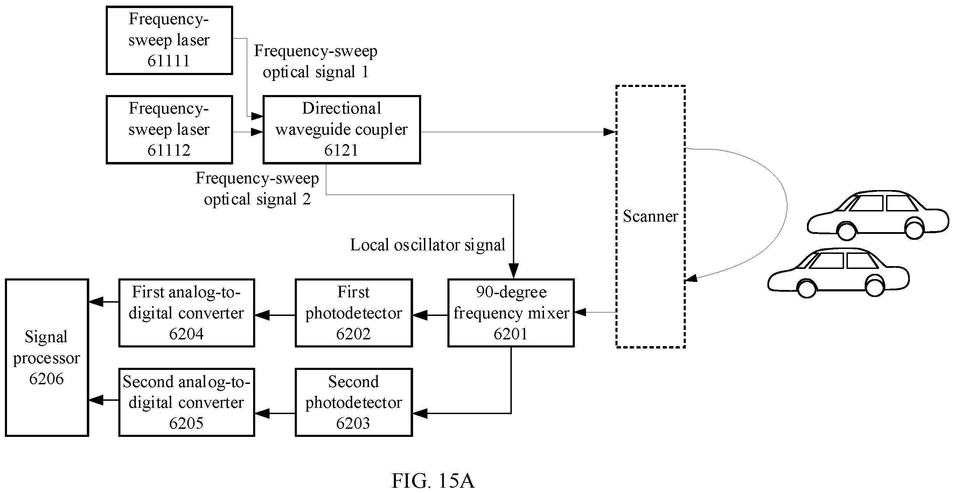

FIG. 15A is a diagram of a possible structure of a detection system. FIG. 15A uses an example in which a transmit signal is generated in a frequency multiplexing manner for description. A frequency-sweep signal source 611 includes N directly modulated frequency-sweep lasers. In FIG. 15A, for example, N is 2, and the frequency-sweep lasers are a frequency-sweep laser 61111 and a frequency-sweep laser 61112. A multiplexer/demultiplexer component 612 includes at least one directional waveguide coupler 6121. A receiving apparatus 620 may use an IQ receiver, an I receiver, or a Q receiver. FIG. 15A uses an example in which one IQ receiver is used, and the IQ receiver uses the structure shown in FIG. 13 as an example. For ease of description, components of the IQ receiver are not identified.

A wavelength of the frequency-sweep laser 6111 changes with time, so that a frequency of an output frequency-sweep optical signal changes in a set frequency range. In the N frequency-sweep lasers 6111, wavelength change ranges of different frequency-sweep lasers 6111 are different.

The frequency-sweep laser 61111 outputs a frequency-sweep optical signal 1, where a frequency-sweep cycle of the frequency-sweep optical signal 1 is T1, and a frequency-sweep bandwidth is B1. A wavelength change range of the frequency-sweep laser 61111 is $[\lambda1,\lambda2]$, and a frequency change range of an output frequency-sweep optical signal 1 is [f1, f2]. A wavelength change range of the frequency-sweep laser 61112 is $[\lambda3,\lambda4]$, and a frequency change range of an output frequency-sweep optical signal 2 is [f3, f4]. The frequency-sweep bandwidth B1 and a frequency-sweep bandwidth B2 may be the same or different, and the frequency-sweep cycle T1 and a frequency-sweep cycle T2 may be the same or different, but T1/T2 or T2/T1 is a positive integer. In the embodiment shown in FIG. 15A, wavelengths of laser signals transmitted by the frequency-sweep laser 61111 and the frequency-sweep laser 61112 are adjusted, so that the output frequency-sweep optical signal 1 and the output frequency-sweep optical signal 2 meet a condition that the first frequency-sweep optical signal and the second frequency-sweep optical signal meet. For example, the frequency-sweep optical signal 1 and the frequency-sweep optical signal 2 meet a condition 1 + a condition 2 + a condition 4 + a condition 5 + a condition 6 + a condition 7.

The frequency-sweep optical signal 1 and the frequency-sweep optical signal 2 that are output by the frequency-sweep laser 61111 and the frequency-sweep laser 61112 are coupled by using the directional waveguide coupler 6121, and two optical signals are output, where one optical signal is used as a local oscillator signal, and the other optical signal is used as a detection signal. Power of the two optical signals may be the same or may be different. In some embodiments, when the power of the two optical signals is not equal, one optical signal with relatively low power may be used as the local oscillator signal, and is used to perform coherent reception on a received signal. One optical signal with relatively high power is used as the detection signal, transmitted by using a scanner, and used to detect a to-be-detected object. After the detection signal meets M to-be-detected objects, the detection signal is reflected to form M echo signals. After arriving at a lidar, the M echo signals are received by the scanner. The M echo signals and one local oscillator signal enter a 90-degree frequency mixer 6201 for optical mixing, to obtain a frequency mixed signal. Two optical signals output after frequency mixing are respectively converted by a first photodetector 6202 and a second photodetector 6203 into two analog electrical signals, and then converted into two digital electrical signals by a first analog-to-digital converter 6204 and a second analog-to-digital converter 6205. The two digital signals enter a signal processor 6206 for processing, and finally information such as distances and velocities of the M detected objects is output. In some embodiments, before the detection signal is transmitted, amplification processing may be performed first, and then the detection signal is transmitted. For example, a sending apparatus 610 may further include an optical amplifier (not shown in the figure), for example, a semiconductor optical amplifier or an optical fiber amplifier. The optical amplifier performs amplification processing on the detection signal that is output by the directional waveguide coupler 3, and then transmits the detection signal by using the scanner.

In the foregoing solution, wavelength ranges of different frequency-sweep lasers are adjusted to implement frequency-sweep optical signals in different frequency ranges, and implementation is simple. Frequency-sweep optical signals with different slopes are introduced. Therefore, in this case, for a real target, coherent detection is performed in two time periods corresponding to the different frequency-sweep optical signals. This can exclude a false target. When there is a specific guard bandwidth in frequency domain between the different frequency-sweep optical signals (that is, if the condition 6 is met), a beat frequency signal that is not needed can be prevented from being generated. Therefore, this can avoid a calculation error, and reduce complexity of calculating the velocity or the distance. In this embodiment of this application, the transmit signals are formed through transmit frequency multiplexing, so that the plurality of targets are distinguished without increasing the measurement time, and a lidar point rate remains unchanged. In addition, in the foregoing solution, a frequency value of the frequency-sweep optical signal 1 is always less than a frequency value of the frequency-sweep optical signal 2. Therefore, the frequency-sweep optical signal 1 and the frequency-sweep optical signal 2 are not confused in the 90-degree frequency mixer 6201, and may be received by using a same receiver. This can improve resource utilization, and reduce costs.

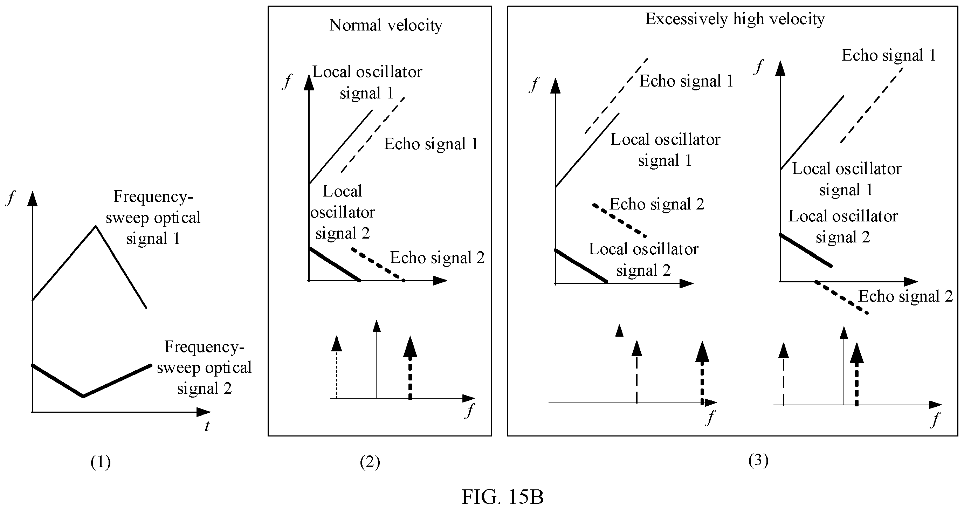

For example, refer to FIG. 15B. Waveforms of the frequency-sweep optical signal 1 and the frequency-sweep optical signal 2 are shown in (1) in FIG. 15B. For signal waveforms and a spectrum in a normal rate, refer to (2) in FIG. 15B. For signal waveforms and a spectrum in an excessively high rate, refer to (3) in FIG. 15B. In FIG. 15B, a local oscillator signal of the frequency-sweep optical signal 1 is referred to as a local oscillator signal 1, an echo signal of the frequency-sweep optical signal 1 is referred to as an echo signal 1, a local oscillator signal of the frequency-sweep optical signal 2 is referred to as a local oscillator signal 2, and an echo signal of the frequency-sweep optical signal 2 is referred to as an echo signal 2. It should be noted that, FIG. 15B only uses some waveforms of the frequency-sweep optical signal 1 and the frequency-sweep optical signal 2 for description, and principles of other waveforms are similar and are not described again. It can be seen from (2) in FIG. 15B and (3) in FIG. 15B that the frequency value of the frequency-sweep optical signal 1 is always less than the frequency value of the frequency-sweep optical signal 2. Therefore, the frequency-sweep optical signal 1 and the frequency-sweep optical signal 2 are not confused in the 90-degree frequency mixer 6201.

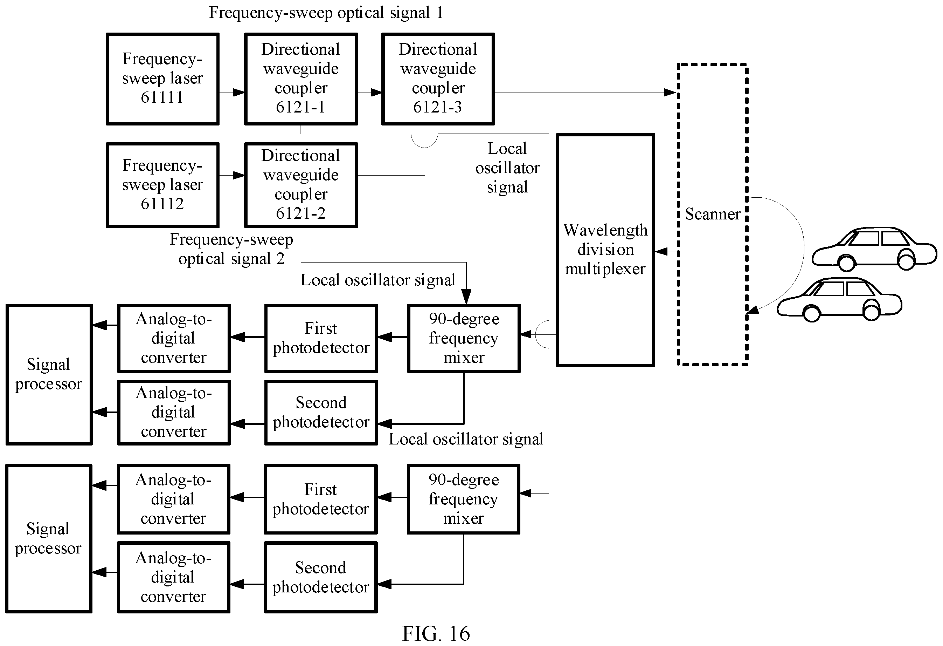

FIG. 16 is a diagram of a possible structure of a detection system. FIG. 16 uses an example in which a transmit signal is generated in a frequency multiplexing manner for description. A frequency-sweep signal source 611 includes N directly modulated frequency-sweep lasers. In FIG. 16, for example, N is 2, and the frequency-sweep lasers are a frequency-sweep laser 61111 and a frequency-sweep laser 61112. A multiplexer/demultiplexer component 612 includes three directional waveguide couplers 6121, which are respectively referred to as a directional waveguide coupler 6121-1, a directional waveguide coupler 6121-2, and a directional waveguide coupler 6121-3 for ease of differentiation. A receiving apparatus 620 may use two IQ receivers. For ease of description, components of the IQ receiver are not identified.

The frequency-sweep laser 61111 outputs a frequency-sweep optical signal 1. The frequency-sweep laser 61112 outputs a frequency-sweep optical signal 2. For a condition that the frequency-sweep optical signal 1 and the frequency-sweep optical signal 2 meet, refer to the description of the embodiment corresponding to FIG. 15A, and details are not described herein again. The frequency-sweep optical signal 1 is output by the directional waveguide coupler 6121-1 and split into two parts. One part of the optical signal is transmitted to one receiver as local oscillator signals, and the other part of the optical signal enters the directional waveguide coupler 6121-3. The frequency-sweep optical signal 2 is output by the directional waveguide coupler 6121-2 and split into two parts. One part of the optical signal is transmitted to the other receiver as local oscillator signals, and the other part of the optical signal enters the directional waveguide coupler 6121-3. A detection signal that is output by the directional waveguide coupler 3 is transmitted by the scanner to detect the to-be-detected object. In some embodiments, before the detection signal is transmitted, amplification processing may be performed first, and then the detection signal is transmitted. For example, a sending apparatus 610 may further include an optical amplifier (not shown in the figure). The optical amplifier performs amplification processing on the detection signal that is output by the directional waveguide coupler 3, and then transmits the detection signal by using the scanner. In some embodiments, the detection system may further include a wavelength division demultiplexer, configured to demultiplex an echo signal received from the scanner into two optical signals, and the two optical signals respectively enter the two receivers. A processing manner of the two receivers is described above, and details are not described herein again.

The two frequency-sweep optical signals with different wavelength ranges and different slopes are used through frequency multiplexing to form transmit signals, and the transmit signals are used to detect M detected objects. This can exclude a false target. In addition, different IQ receivers are used at a receiving end to perform coherent detection on the different frequency-sweep optical signals, reducing computational complexity of a signal processor. In the foregoing embodiment, accurate positioning of a plurality of detected target objects is implemented without increasing measurement time, and a lidar point rate remains unchanged.

In some embodiments, in the detection system shown in FIG. 16, the receiving apparatus 620 may alternatively use two I receivers or two Q receivers, velocity ambiguity does not occur, and detection costs can be reduced.

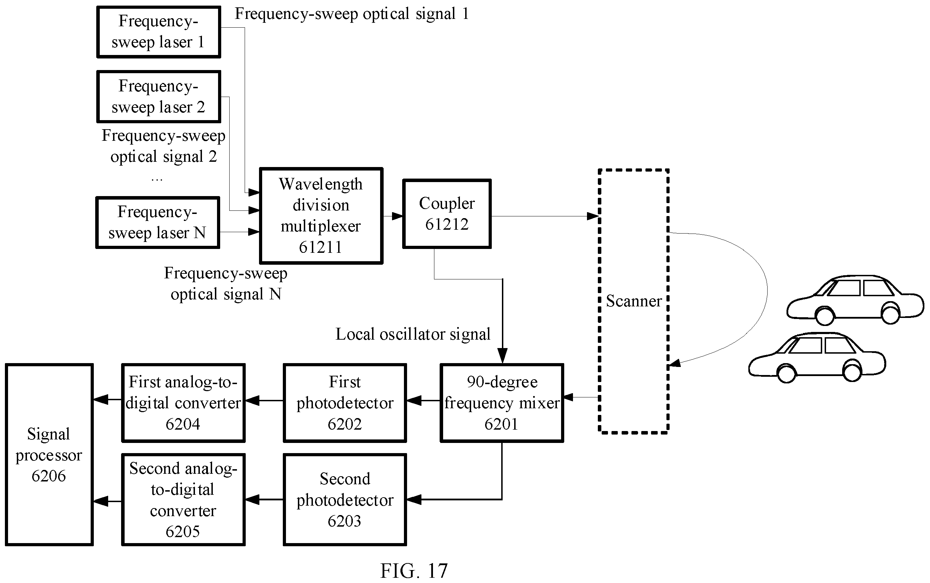

FIG. 17 is a diagram of a possible structure of a detection system. A difference between an embodiment corresponding to FIG. 17 and the embodiment corresponding to FIG. 16 is that in FIG. 17, a multiplexer/demultiplexer component includes a wavelength division multiplexer 61211 and a coupler 61212. Frequency-sweep optical signals 1 to N output by N frequency-sweep lasers are multiplexed by the wavelength division multiplexer 61211. Optical signals output by the wavelength division multiplexer 61211 are split into two optical signals by the coupler. One optical signal is input to a receiver as a local oscillator signal, and the other optical signal is sent by a scanner as a detection signal. In some embodiments, before the detection signal is transmitted, amplification processing may be performed first, and then the detection signal is transmitted. For example, a sending apparatus 610 may further include an optical amplifier (not shown in the figure). The optical amplifier performs amplification processing on the detection signal that is output by the coupler 61212, and then transmits the detection signal by using the scanner.

In the foregoing solution, N signals with different frequency-sweep waveforms are loaded to laser signals with different wavelength ranges, and frequency multiplexing is performed, to generate a transmit signal. M detected objects are simultaneously detected by using the signal, to exclude a false target. In addition, an IQ receiver is used at a receiving end to perform coherent detection on the different frequency-sweep optical signals, reducing computational complexity of a signal processor. In the foregoing embodiment, accurate positioning of a plurality of detected target objects is implemented without increasing measurement time, and a lidar point rate remains unchanged. In some embodiments, in the detection system shown in FIG. 17, the receiving apparatus 620 may alternatively use an I receiver or a Q receiver, velocity ambiguity does not occur, and detection costs can be reduced.

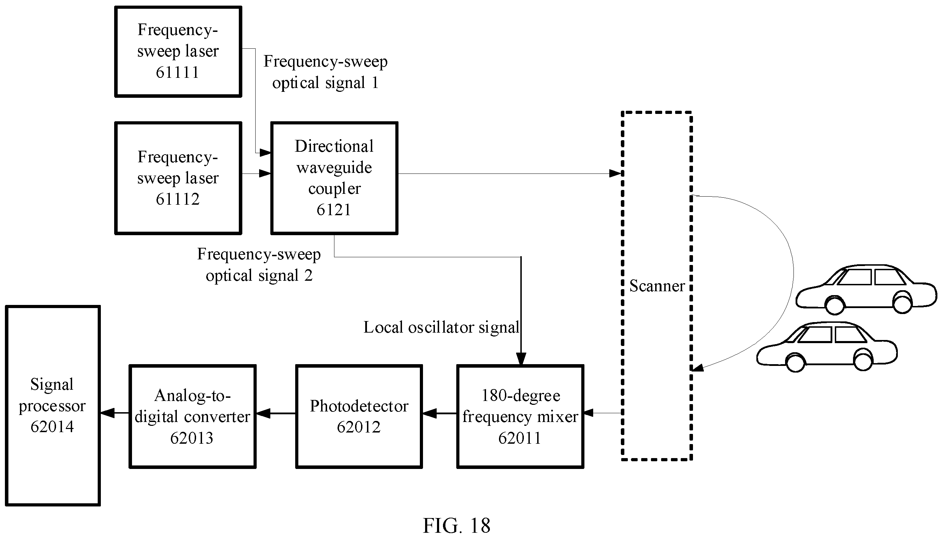

FIG. 18 is a diagram of a possible structure of a detection system. A difference between an embodiment corresponding to FIG. 18 and the embodiment corresponding to FIG. 15A lies in that the receiving apparatus 620 in FIG. 15A uses one IQ receiver, and a receiving apparatus 620 in FIG. 18 uses one I receiver or Q receiver. In the foregoing solution, velocity ambiguity does not occur, and detection costs can be reduced.

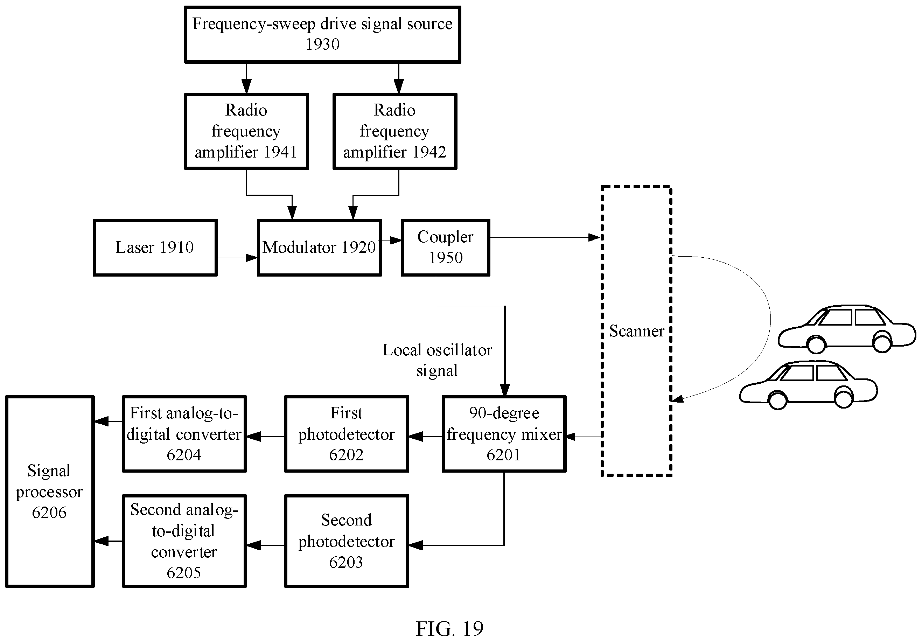

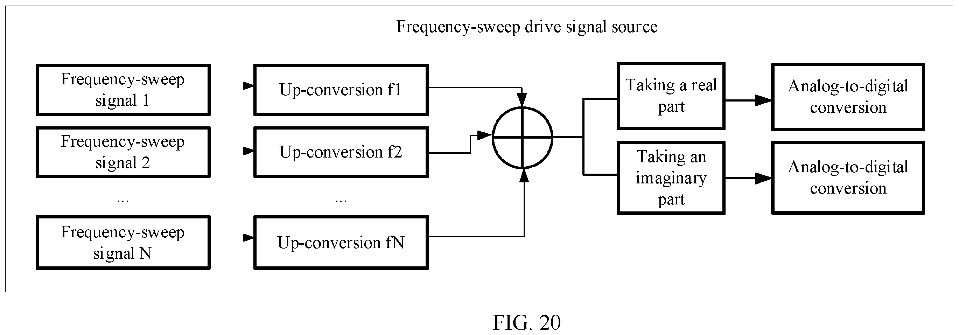

FIG. 19 is a diagram of a possible structure of a detection system. In FIG. 19, N frequency-sweep optical signals are generated by performing IQ modulation on a laser signal transmitted by a laser, and a frequency-sweep waveform may be generated in a digital signal processing manner. A frequency-sweep signal source 611 includes the laser 1910, a modulator 1920, a frequency-sweep drive signal source 1930, and two radio frequency amplifiers. For ease of differentiation, the two radio frequency amplifiers are referred to as a radio frequency amplifier 1941 and a radio frequency amplifier 1942. FIG. 20 shows a manner in which the weep drive signal source generates N frequency-sweep signals. A frequency-sweep signal 1 to a frequency-sweep signal N are the N frequency-sweep signals with different frequencies, and different up-conversion processing is performed on the frequency-sweep signals, to obtain frequency-sweep signals whose frequency ranges meet the foregoing conditions. Then, digital frequency-sweep signals are converted into analog frequency-sweep signals by taking real part and imaginary part and performing digital-to-analog conversion processing. Further, after radio frequency amplification, the analog frequency-sweep signals are modulated onto a laser signal transmitted by the laser. After the analog frequency-sweep signals in different frequency-sweep frequency ranges are modulated onto the laser signal, frequency-sweep optical signals in different frequency-sweep frequency ranges are obtained. A multiplexer/demultiplexer component 612 includes a coupler 1950. The multiplexer/demultiplexer component is configured to demultiplex one optical signal that is sent by the modulator 1920 and that includes the N frequency-sweep optical signals, to obtain a local oscillator signal and a detection signal. The coupler 1950 sends the local oscillator signal to a receiving apparatus 620, and transmits the detection signal by using the scanner. In some embodiments, before the detection signal is transmitted, amplification processing may be performed first, and then the detection signal is transmitted. For example, a sending apparatus 610 may further include an optical amplifier (not shown in the figure). The optical amplifier performs amplification processing on the detection signal that is output by the coupler 1950, and then transmits the detection signal by using the scanner.

In this solution, analog frequency-sweep electrical signals with different frequency-sweep slopes and opposite frequency-sweep directions are loaded to the laser signal, to obtain N frequency-sweep optical signals whose frequency-sweep ranges meet a requirement. M detected objects are detected by using the frequency-sweep optical signals, to exclude a false target. In this embodiment of this application, positioning of a plurality of detected target objects may be implemented without increasing measurement time, and a lidar point rate remains unchanged. In some embodiments, in the detection system shown in FIG. 19, the receiving apparatus 620 may alternatively use an I receiver or a Q receiver, velocity ambiguity does not occur, and detection costs can be reduced.

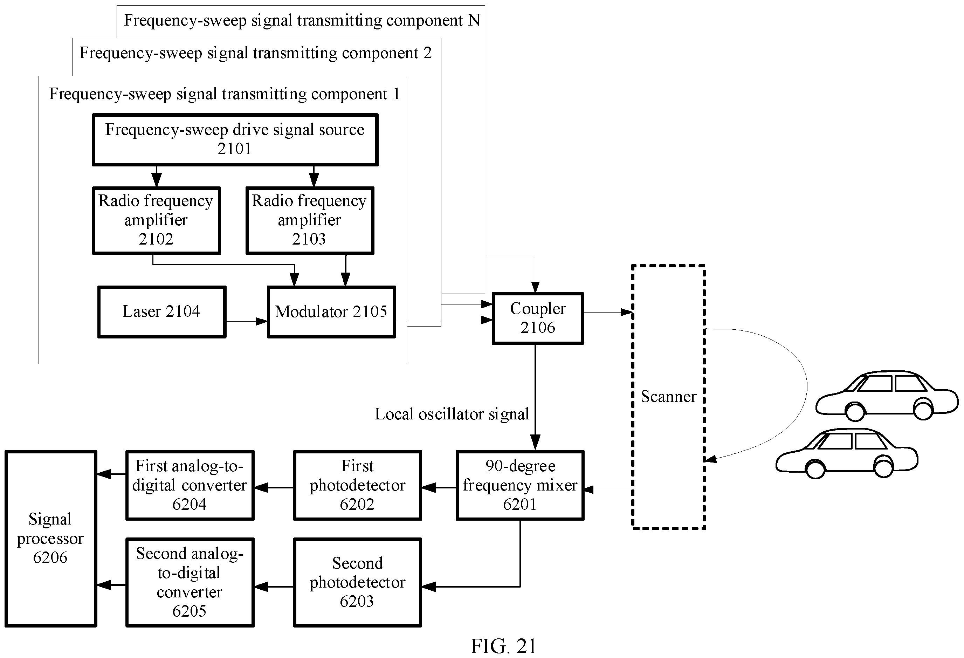

FIG. 21 is a diagram of a possible structure of a detection system. In FIG. 21, N frequency-sweep optical signals are generated by performing IQ modulation on a laser signal transmitted by a laser, and a frequency-sweep waveform may be generated in a digital signal processing manner. In FIG. 21, the frequency-sweep signal source 611 includes N frequency-sweep signal transmitting components, which are respectively frequency-sweep signal transmitting components 1 to N. Each frequency-sweep signal transmitting component includes a frequency-sweep drive signal source 2101, a radio frequency amplifier 2102, a radio frequency amplifier 2103, a laser 2104, and a modulator 2105. The frequency-sweep drive signal source 2101 generates one frequency-sweep signal whose frequency changes periodically, and the frequency-sweep signal is amplified by the radio frequency amplifier and then input to the modulator. The laser 2104 transmits a laser signal. The modulator 2105 modulates the amplified frequency-sweep signal onto the laser signal, to obtain one frequency-sweep optical signal. Therefore, the N frequency-sweep signal transmitting components generate N frequency-sweep optical signals. A multiplexer/demultiplexer component 612 includes a coupler 2106, and is configured to: perform beam combination processing on the frequency-sweep optical signals transmitted by the N frequency-sweep signal transmitting components, and then demultiplex the frequency-sweep optical signals, to obtain a local oscillator signal and a detection signal. The coupler 2106 sends the local oscillator signal to a receiving apparatus 620, and transmits the detection signal by using the scanner. In some embodiments, before the detection signal is transmitted, amplification processing may be performed first, and then the detection signal is transmitted. For example, a sending apparatus 610 may further include an optical amplifier (not shown in the figure). The optical amplifier performs amplification processing on the detection signal that is output by the coupler 2106, and then transmits the detection signal by using the scanner.

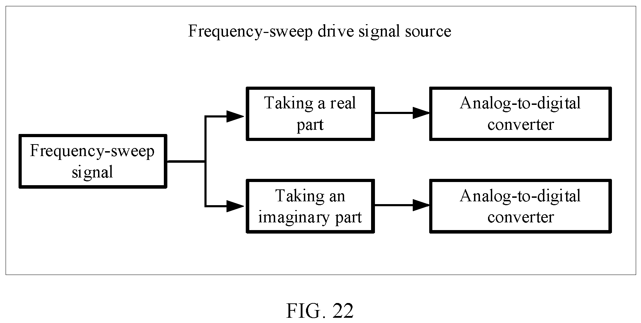

For example, for a manner in which the frequency-sweep drive signal source 2101 generates the frequency-sweep signal whose frequency changes periodically, refer to FIG. 22. The digital frequency-sweep signal is converted into an analog frequency-sweep signal by taking real part and imaginary part and then performing digital-to-analog conversion processing.

In an example, wavelengths of laser signals transmitted by lasers included in different frequency-sweep signal transmitting components are different. In this example, the laser transmits the laser signals of the different wavelengths, so that frequency ranges of the frequency-sweep optical signals transmitted by the N frequency-sweep signal transmitting components meet the foregoing condition.

In another example, frequency ranges of frequency-sweep signals generated by frequency-sweep drive signal sources included in different frequency-sweep signal transmitting components are different. In this example, the frequency-sweep signal sources generate the analog frequency-sweep electrical signals in different frequency ranges, and modulate the analog frequency-sweep electrical signals onto laser signals transmitted by lasers, so that frequency ranges of the frequency-sweep optical signals transmitted by the N frequency-sweep signal transmitting components meet the foregoing condition.

In still another example, wavelengths of laser signals transmitted by lasers included in different frequency-sweep signal transmitting components are different, and frequency ranges of frequency-sweep signals generated by frequency-sweep drive signal sources included in the different frequency-sweep signal transmitting components are different. In this example, the frequency-sweep signal sources generate the analog frequency-sweep electrical signals in different frequency ranges, and the analog frequency-sweep electrical signals are correspondingly modulated onto the laser signals of the different wavelengths separately transmitted by the N lasers, so that frequency ranges of the frequency-sweep optical signals transmitted by the N frequency-sweep signal transmitting components meet the foregoing condition.

In the foregoing solution, N frequency-sweep signals that meet a condition are generated in a digital signal processing manner, and are modulated onto the laser signals to generate the N frequency-sweep optical signals that meet the condition, to detect M detected objects. This can exclude a false target. There is a specific guard bandwidth in frequency domain between two adjacent analog frequency-sweep electrical signals, so that there is a specific guard bandwidth exists in frequency domain between two output adjacent frequency-sweep optical signals. This can prevent generation of a beat frequency signal that is not needed. In this embodiment of this application, positioning of a plurality of detected target objects may be implemented without increasing measurement time, and a lidar point rate remains unchanged.

In some embodiments, in the detection system shown in FIG. 21, the receiving apparatus 620 may alternatively use an I receiver or a Q receiver, velocity ambiguity does not occur, and detection costs can be reduced.

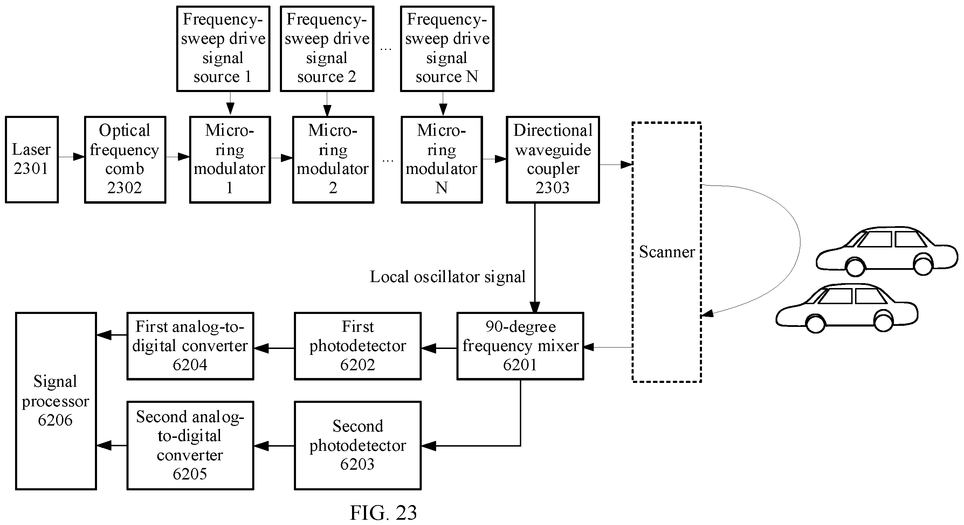

FIG. 23 is a diagram of a possible structure of a detection system. In FIG. 23, N frequency-sweep optical signals are generated by performing modulation on a laser signal transmitted by a laser, and a frequency-sweep waveform may be generated in a digital signal processing manner. In FIG. 23, a frequency-sweep signal source 611 includes a laser 2301, an optical frequency comb 2302, N micro-ring modulators, and N frequency-sweep drive signal sources. The N micro-ring modulators are micro-ring modulators 1 to N, and the N frequency-sweep drive signal sources are frequency-sweep drive signal sources 1 to N. For a principle of generating a frequency-sweep signal by the frequency-sweep drive signal source, refer to FIG. 22. Details are not described herein again.

The laser 2301 transmits a laser signal. The optical frequency comb 2302 processes the laser signal, to obtain optical signals of N wavelengths. The N frequency-sweep drive signal sources are connected to the N micro-ring modulators in a one-to-one correspondence, and the N micro-ring modulators are sequentially connected in series in optical paths of the optical signals of the N wavelengths. A micro-ring modulator i (i = 1 ... N) modulates, onto an optical signal of a wavelength corresponding to the micro-ring modulator i, a frequency-sweep signal that is output by a frequency-sweep drive signal source i and whose frequency range changes periodically, to obtain N frequency-sweep optical signals that meet the foregoing condition. The N micro-ring modulators are in a one-to-one correspondence with the N wavelengths, and frequency ranges of frequency-sweep signals output by different frequency-sweep drive signal sources are different. A multiplexer/demultiplexer component 612 may include a directional waveguide coupler 2303, and is configured to demultiplex an optical signal that is output by a micro-ring modulator N, to obtain a local oscillator signal and a detection signal. The directional waveguide coupler 2303 sends the local oscillator signal to a receiving apparatus 620, and transmits the detection signal by using the scanner. In some embodiments, before the detection signal is transmitted, amplification processing may be performed first, and then the detection signal is transmitted. For example, the sending apparatus 610 may further include an optical fiber amplifier (not shown in the figure). The optical fiber amplifier performs amplification processing on the detection signal that is output by the directional waveguide coupler 2303, and then transmits the detection signal by using the scanner.

In this solution, the N frequency-sweep drive signal sources generate analog frequency-sweep electrical signals in different frequency ranges, and the laser signal is converted into light of a plurality of frequencies by using the optical frequency comb, which may also be understood as light of different wavelengths. In addition, the N micro-ring modulators respectively modulate the N analog frequency-sweep electrical signals in different frequency ranges onto optical signals of different wavelengths, and frequency ranges of the generated N frequency-sweep optical signals meet the foregoing condition. The N frequency-sweep optical signals meet the condition are transmitted, to detect M detected objects. This can exclude a false target. There is a specific guard bandwidth in frequency domain between two adjacent analog frequency-sweep electrical signals, so that there is a specific guard bandwidth exists in frequency domain between two adjacent frequency-sweep optical signals. This can prevent generation of a beat frequency signal that is not needed. In this embodiment of this application, positioning of a plurality of detected target objects may be implemented without increasing measurement time, and a lidar point rate remains unchanged.

In some embodiments, in the detection system shown in FIG. 23, the receiving apparatus 620 may alternatively use an I receiver or a Q receiver, velocity ambiguity does not occur, and detection costs can be reduced.

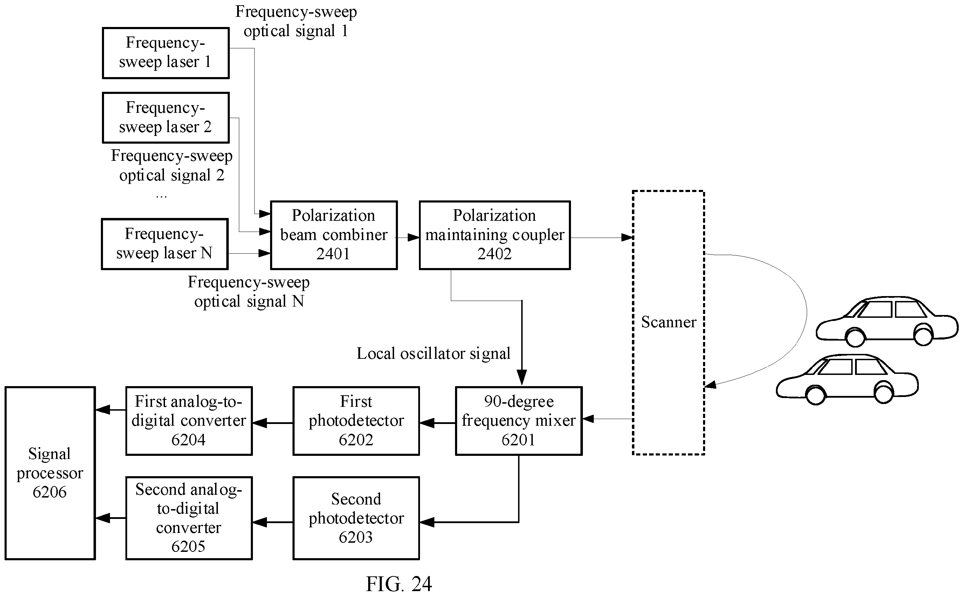

FIG. 24 is a diagram of a possible structure of a detection system. A frequency-sweep signal source 611 includes N frequency-sweep lasers: frequency-sweep lasers 1 to N. Polarization directions of frequency-sweep optical signals generated by different frequency-sweep lasers are different. The N frequency-sweep lasers generate N frequency-sweep optical signals, and the N optical signals meet the foregoing condition. In FIG. 24, a multiplexer/demultiplexer component 612 includes a polarization beam combiner (polarization beam combiner, PBC) 2401 and a polarization maintaining coupler 2402. The polarization beam combiner 2401 performs beam combination on the N frequency-sweep optical signals based on polarization directions of the N frequency-sweep optical signals, to obtain a radar transmit signal. Then, the polarization maintaining coupler 2402 demultiplexes the radar transmit signal to obtain a local oscillator signal and a detection signal. The polarization maintaining coupler 2402 sends the local oscillator signal to a receiving apparatus 620, and transmits the detection signal by using the scanner. In some embodiments, before the detection signal is transmitted, amplification processing may be performed first, and then the detection signal is transmitted. For example, a sending apparatus 610 may further include a polarization maintaining amplifier (not shown in the figure). The polarization maintaining amplifier performs amplification processing on the detection signal that is output by the polarization maintaining coupler 2402, and then transmits the detection signal by using the scanner.

In the foregoing solution, the frequency-sweep optical signals with different slopes are multiplexed in the polarization multiplexing manner to form transmit signals, and the transmit signals are used to detect M detected objects. In this way, a false target can be excluded without increasing measurement time, and a point rate of the lidar remains unchanged. In some embodiments, in the detection system shown in FIG. 24, the receiving apparatus 620 may alternatively use an I receiver or a Q receiver, velocity ambiguity does not occur, and detection costs can be reduced.

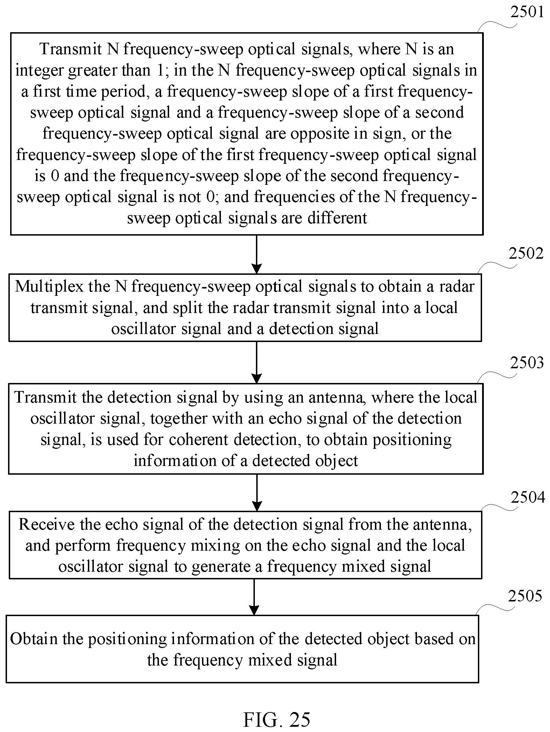

Based on the foregoing content and a same concept, this application provides a detection method of a lidar. Refer to a description in FIG. 25. The detection method may be applied to the detection system shown in any one of the embodiments in FIG. 15A to FIG. 24. It may also be understood that the detection method may be performed based on the detection system shown in any one of the embodiments in FIG. 15A to FIG. 24.

FIG. 25 is a schematic flowchart of a detection method of a lidar according to this application. The detection method includes the following steps.

2501: Transmit N frequency-sweep optical signals, where N is an integer greater than 1; in the N frequency-sweep optical signals in a first time period, a frequency-sweep slope of a first frequency-sweep optical signal and a frequency-sweep slope of a second frequency-sweep optical signal are opposite in sign, or the frequency-sweep slope of the first frequency-sweep optical signal is 0 and the frequency-sweep slope of the second frequency-sweep optical signal is not 0; and frequencies of the N frequency-sweep optical signals are different.

For a condition that the N frequency-sweep optical signals need to meet, refer to the foregoing related descriptions. Details are not described herein again.

2502: Multiplex the N frequency-sweep optical signals to obtain a radar transmit signal, and split the radar transmit signal into a local oscillator signal and a detection signal.

2503: Transmit the detection signal by using an antenna, where the local oscillator signal, together with an echo signal of the detection signal, is used for coherent detection, to obtain positioning information of a detected object.

In a possible design, the detection method may further include:

2504: Receive the echo signal of the detection signal from the antenna, and perform frequency mixing on the echo signal and the local oscillator signal, to generate a frequency mixed signal.

2505: Obtain positioning information of a detected object based on the frequency mixed signal.

In a possible implementation, the first frequency-sweep optical signal and the second frequency-sweep optical signal are periodic frequency-sweep optical signals.

In a possible implementation, a signal cycle of the first frequency-sweep optical signal is M times a signal cycle of the second frequency-sweep optical signal, or the signal cycle of the second frequency-sweep signal is M times the signal cycle of the first frequency-sweep optical signal, and M is a positive integer.

In a possible implementation, the signal cycle of the first frequency-sweep optical signal is K times a detection cycle of the lidar, or the signal cycle of the second frequency-sweep optical signal is K times the detection cycle of the lidar, and K is a positive integer.

In a possible implementation, the signal cycle of the first frequency-sweep optical signal is greater than or equal to the signal cycle of the second frequency-sweep signal. In one signal cycle of the first frequency-sweep optical signal, the frequency-sweep slope of the first frequency-sweep signal in the first time period and a frequency-sweep slope of the first frequency-sweep signal in a second time period are opposite in sign; the frequency-sweep slope of the second frequency-sweep signal in the first time period and a frequency-sweep slope of the second frequency-sweep signal in the second time period are opposite in sign; the frequency-sweep slope of the first frequency-sweep signal in the first time period is different from the frequency-sweep slope of the second frequency-sweep signal in the second time period; and the frequency-sweep slope of the second frequency-sweep signal in the first time period is different from the frequency-sweep slope of the first frequency-sweep signal in the second time period.

In a possible implementation, a minimum frequency difference between the first frequency-sweep optical signal and the second frequency-sweep optical signal is related to a receiving bandwidth of the antenna.

In a possible implementation, the minimum frequency difference between the first frequency-sweep optical signal and the second frequency-sweep optical signal meets the following condition:

$$min(|f_1 - f_2|) > |fR_1| + |fR_2| + fOE$$

$f_1$ represents a frequency-sweep range of the first frequency-sweep optical signal, $f_2$ represents a frequency-sweep range of the second frequency-sweep optical signal, fRi represents a maximum value of a frequency shift amount of an echo signal of the first frequency-sweep optical signal relative to a local oscillator signal of the first frequency-sweep optical signal, $fR_2$ represents a maximum value of a frequency shift amount of an echo signal of the second frequency-sweep optical signal relative to a local oscillator signal of the second frequency-sweep optical signal, and $fOE$ represents the receiving bandwidth of the antenna.

In a possible implementation, the first frequency-sweep signal and the second frequency-sweep signal meet:

$$\text{round}\left(\frac{2K_1R_{min}}{c}\right) > \text{round}\left(\frac{2K_2R_{min}}{c}\right) \text{ or } \text{round}\left(\frac{2K_2R_{min}}{c}\right) > \text{round}\left(\frac{2K_1R_{min}}{c}\right)$$

round( ) represents an operation of rounding to a nearest integer, $K_1$ represents the absolute value of the frequency-sweep slope of the first frequency-sweep signal in the first time period, $K_2$ represents the absolute value of the frequency-sweep slope of the second frequency-sweep signal in the first time period, $R_{min}$ represents a minimum detectable distance of the lidar, and c represents a light speed.

In a possible implementation, a waveform of the first frequency-sweep optical signal includes at least one of a triangular wave, a trapezoidal wave, and a sawtooth wave. When the frequency-sweep slope of the second frequency-sweep optical signal is not 0, a waveform of the second frequency-sweep optical signal includes at least one of a triangular wave, a trapezoidal wave, and a sawtooth wave.

In a possible implementation, wavelength change ranges of the N frequency-sweep optical signals are different, or polarization directions of the N frequency-sweep optical signals are different.

In embodiments of this application, if there are no special statements and logic conflicts, terms and/or descriptions between different embodiments are consistent and may be mutually referenced, and technical features in different embodiments may be combined based on an internal logical relationship thereof, to form a new embodiment.

It may be clearly understood by a person skilled in the art that, for the purpose of convenient and brief description, for the foregoing described method, refer to corresponding descriptions in the foregoing apparatus or system embodiments, and details are not described herein again.

Although this application is described with reference to specific features and embodiments thereof, it is clear that various modifications and combinations may be made to them without departing from the scope of this application. Correspondingly, this specification and the accompanying drawings are merely examples for description of solutions defined in the appended claims, and are considered as covering any and all modifications, variations, combinations, or equivalents within the scope of this application.

Obviously, a person skilled in the art can make various modifications and variations to this application without departing from the scope of this application. This application is intended to cover these modifications and variations of embodiments of this application provided that they fall within the scope of protection defined by the following claims and their equivalent technologies.

**Claims**

1. A sending apparatus of a lidar, comprising a frequency-sweep signal source and a multiplexer/demultiplexer component, wherein

   the frequency-sweep signal source is configured to transmit N frequency-sweep optical signals, wherein N is an integer greater than 1; in the N frequency-sweep optical signals in a first time period, a frequency-sweep slope of a first frequency-sweep optical signal and a frequency-sweep slope of a second frequency-sweep optical signal are opposite in sign, or the frequency-sweep slope of the first frequency-sweep optical signal is not 0 and the frequency-sweep slope of the second frequency-sweep optical signal is 0; and frequencies of the N frequency-sweep optical signals are different; and
   the multiplexer/demultiplexer component is configured to: multiplex the N frequency-sweep optical signals to obtain a radar transmit signal, demultiplex the radar transmit signal to obtain a local oscillator signal and a detection signal, transmit the detection signal by using an antenna, and send the local oscillator signal to a receiving apparatus of the lidar.

2. The sending apparatus according to claim 1, wherein an absolute value of the frequency-sweep slope of the first frequency-sweep optical signal is different from an absolute value of the frequency-sweep slope of the second frequency-sweep optical signal.

3. The sending apparatus according to claim 1 or 2, wherein the first frequency-sweep optical signal and the second frequency-sweep optical signal are periodic frequency-sweep optical signals.

4. The sending apparatus according to claim 3, wherein a signal cycle of the first frequency-sweep optical signal is M times a signal cycle of the second frequency-sweep optical signal, or the signal cycle of the second frequency-sweep optical signal is M times the signal cycle of the first frequency-sweep optical signal, and M is a positive integer.

5. The sending apparatus according to claim 3 or 4, wherein the signal cycle of the first frequency-sweep optical signal is K times a detection cycle of the lidar, or the signal cycle of the second frequency-sweep optical signal is K times the detection cycle of the lidar, and K is a positive integer.

6. The sending apparatus according to any one of claims 3 to 5, wherein

in one target signal cycle, the frequency-sweep slope of the first frequency-sweep optical signal in the first time period and a frequency-sweep slope of the first frequency-sweep optical signal in a second time period are opposite in sign, and the frequency-sweep slope of the second frequency-sweep optical signal in the first time period and a frequency-sweep slope of the second frequency-sweep optical signal in the second time period are opposite in sign; and
the frequency-sweep slope of the first frequency-sweep optical signal in the first time period is different from the frequency-sweep slope of the second frequency-sweep optical signal in the second time period, and the frequency-sweep slope of the second frequency-sweep optical signal in the first time period is different from the frequency-sweep slope of the first frequency-sweep optical signal in the second time period, wherein
the target signal cycle is a largest signal cycle between the signal cycle of the first frequency-sweep optical signal and the signal cycle of the second frequency-sweep optical signal.

7. The sending apparatus according to any one of claims 1 to 6, wherein a minimum frequency difference between the first frequency-sweep optical signal and the second frequency-sweep optical signal is related to a receiving bandwidth of the antenna.

8. The sending apparatus according to claim 7, wherein the minimum frequency difference between the first frequency-sweep optical signal and the second frequency-sweep optical signal meets the following condition

$$min(|f_1 - f_2|) > |fR_1| + |fR_2| + fOE,$$

wherein $f_1$ represents a frequency-sweep range of the first frequency-sweep optical signal, $f_2$ represents a frequency-sweep range of the second frequency-sweep optical signal, fRi represents a maximum value of a frequency shift amount of an echo signal of the first frequency-sweep optical signal relative to a local oscillator signal of the first frequency-sweep optical signal, $fR_2$ represents a maximum value of a frequency shift amount of an echo signal of the second frequency-sweep optical signal relative to a local oscillator signal of the second frequency-sweep optical signal, and $fOE$ represents the receiving bandwidth of the antenna.

9. The sending apparatus according to any one of claims 1 to 8, wherein the first frequency-sweep signal and the second frequency-sweep signal meet:

$$\text{round}\left(\frac{2K_1 R_{min}}{c}\right) > \text{round}\left(\frac{2K_2 R_{min}}{c}\right) \text{ or } \text{round}\left(\frac{2K_2 R_{min}}{c}\right) > \text{round}\left(\frac{2K_1 R_{min}}{c}\right),$$

wherein round( ) represents an operation of rounding to a nearest integer, $K_1$ represents the absolute value of the frequency-sweep slope of the first frequency-sweep signal in the first time period, $K_2$ represents the absolute value of the frequency-sweep slope of the second frequency-sweep signal in the first time period, $R_{min}$ represents a minimum detectable distance of the lidar, and c represents a light speed.

10. The sending apparatus according to any one of claims 1 to 9, wherein a waveform of the first frequency-sweep optical signal comprises at least one of a triangular wave, a trapezoidal wave, and a sawtooth wave; and when the frequency-sweep slope of the second frequency-sweep optical signal is not 0, a waveform of the second frequency-sweep optical signal comprises at least one of a triangular wave, a trapezoidal wave, and a sawtooth wave.

11. The sending apparatus according to any one of claims 1 to 10, wherein wavelength change ranges of the N frequency-sweep optical signals are different, or polarization directions of the N frequency-sweep optical signals are different.

12. A detection system of a lidar, comprising the sending apparatus of the lidar according to any one of claims 1 to 11 and a receiving apparatus of the lidar, wherein the receiving apparatus is configured to: receive a local oscillator signal from the sending apparatus and an echo signal of a detection signal sent by the sending apparatus, perform frequency mixing on the echo signal and the local oscillator signal to generate a frequency mixed signal, and obtain positioning information of a detected object based on the frequency mixed signal.

13. The system according to claim 12, wherein the receiving apparatus comprises a 90-degree frequency mixer, a first photodetector, a second photodetector, a first analog-to-digital converter, a second analog-to-digital converter, and a signal processor, wherein

the 90-degree frequency mixer is configured to: perform frequency mixing on the echo signal that is of the detection signal and that is received from an antenna and the local oscillator signal to generate the frequency mixed signal, split the frequency mixed signal into a first signal and a second signal, send the first signal to the first photodetector, and send the second signal to the second photodetector;
the first photodetector is configured to: perform detection on the first signal, and output the first signal to the first analog-to-digital converter for analog-to-digital conversion;
the second photodetector is configured to: perform detection on the second signal, and output the second signal to the second analog-to-digital converter for analog-to-digital conversion; and
the signal processor is configured to process a digital signal that is output by the first analog-to-digital converter and a digital signal that is output by the second analog-to-digital converter, to obtain the positioning information of the detected object.

14. The system according to claim 12, wherein the receiving apparatus comprises a 180-degree frequency mixer, a third photodetector, a third analog-to-digital converter, and a signal processor, wherein

the 180-degree frequency mixer is configured to: perform frequency mixing on the echo signal that is of the detection signal and that is received from an antenna and the local oscillator signal to generate the frequency mixed signal, and send the frequency mixed signal to the third photodetector;
the third photodetector is configured to: perform detection on the frequency mixed signal, and output the frequency mixed signal to the third analog-to-digital converter for analog-to-digital conversion; and
the signal processor is configured to process a digital signal that is output by the third analog-to-digital converter, to obtain the positioning information of the detected object.

15. A detection method based on a lidar, comprising:

transmitting N frequency-sweep optical signals, wherein N is an integer greater than 1; in the N frequency-sweep optical signals in a first time period, a frequency-sweep slope of a first frequency-sweep optical signal and a frequency-sweep slope of a second frequency-sweep optical signal are opposite in sign, or the frequency-sweep slope of the first frequency-sweep optical signal is 0 and the frequency-sweep slope of the second frequency-sweep optical signal is not 0; and frequencies of the N frequency-sweep optical signals are different;
multiplexing the N frequency-sweep optical signals to obtain a radar transmit signal, splitting the radar transmit signal into a local oscillator signal and a detection signal, and transmitting the detection signal by using an antenna;
receiving an echo signal of the detection signal from the antenna, and performing frequency mixing on the echo signal and the local oscillator signal, to generate a frequency mixed signal; and

obtaining positioning information of a detected object based on the frequency mixed signal.

16. The method according to claim 15, wherein an absolute value of the frequency-sweep slope of the first frequency-sweep optical signal is different from an absolute value of the frequency-sweep slope of the second frequency-sweep optical signal.

17. The method according to claim 15 or 16, wherein the first frequency-sweep optical signal and the second frequency-sweep optical signal are periodic frequency-sweep optical signals.

18. The method according to claim 17, wherein a signal cycle of the first frequency-sweep optical signal is M times a signal cycle of the second frequency-sweep optical signal, or the signal cycle of the second frequency-sweep signal is M times the signal cycle of the first frequency-sweep optical signal, and M is a positive integer.

19. The method according to claim 17 or 18, wherein the signal cycle of the first frequency-sweep optical signal is K times a detection cycle of the lidar, or the signal cycle of the second frequency-sweep optical signal is K times the detection cycle of the lidar, and K is a positive integer.

20. The method according to any one of claims 17 to 19, wherein

in one target signal cycle, the frequency-sweep slope of the first frequency-sweep optical signal in the first time period and a frequency-sweep slope of the first frequency-sweep optical signal in a second time period are opposite in sign, and the frequency-sweep slope of the second frequency-sweep optical signal in the first time period and a frequency-sweep slope of the second frequency-sweep optical signal in the second time period are opposite in sign; and
the frequency-sweep slope of the first frequency-sweep optical signal in the first time period is different from the frequency-sweep slope of the second frequency-sweep optical signal in the second time period, and the frequency-sweep slope of the second frequency-sweep optical signal in the first time period is different from the frequency-sweep slope of the first frequency-sweep optical signal in the second time period, wherein the target signal cycle is a largest signal cycle between the signal cycle of the first frequency-sweep optical signal and the signal cycle of the second frequency-sweep optical signal.

21. The method according to any one of claims 15 to 20, wherein a minimum frequency difference between the first frequency-sweep optical signal and the second frequency-sweep optical signal is related to a receiving bandwidth of the antenna.

22. The method according to claim 21, wherein the minimum frequency difference between the first frequency-sweep optical signal and the second frequency-sweep optical signal meets the following condition:

$$min(|f_1 - f_2|) > |fR_1| + |fR_2| + fOE,$$

wherein $f_1$ represents a frequency-sweep range of the first frequency-sweep optical signal, $f_2$ represents a frequency-sweep range of the second frequency-sweep optical signal, $fR_1$ represents a maximum value of a frequency shift amount of an echo signal of the first frequency-sweep optical signal relative to a local oscillator signal of the first frequency-sweep optical signal, $fR_2$ represents a maximum value of a frequency shift amount of an echo signal of the second frequency-sweep optical signal relative to a local oscillator signal of the second frequency-sweep optical signal, and $fOE$ represents the receiving bandwidth of the antenna.

23. The method according to any one of claims 15 to 22, wherein the first frequency-sweep signal and the second frequency-sweep signal meet:

$$\text{round}\left(\frac{2K_1 R_{min}}{c}\right) > \text{round}\left(\frac{2K_2 R_{min}}{c}\right) \text{ or } \text{round}\left(\frac{2K_2 R_{min}}{c}\right) > \text{round}\left(\frac{2K_1 R_{min}}{c}\right),$$

wherein round() represents an operation of rounding to a nearest integer, $K_1$ represents the absolute value of the frequency-sweep slope of the first frequency-sweep signal in the first time period, $K_2$ represents the absolute value of the frequency-sweep slope of the second frequency-sweep signal in the first time period, $R_{min}$ represents a

minimum detectable distance of the lidar, and c represents a light speed.

24. The method according to any one of claims 15 to 23, wherein a waveform of the first frequency-sweep optical signal comprises at least one of a triangular wave, a trapezoidal wave, and a sawtooth wave; and
when the frequency-sweep slope of the second frequency-sweep optical signal is not 0, a waveform of the second frequency-sweep optical signal comprises at least one of a triangular wave, a trapezoidal wave, and a sawtooth wave.

25. The method according to any one of claims 15 to 24, wherein wavelength change ranges of the N frequency-sweep optical signals are different, or polarization directions of the N frequency-sweep optical signals are different.

FIG. 1

FIG. 2

FIG. 3

FIG. 4

FIG. 5

EP 4 446 769 A1

Detection system 600

Sending apparatus 610

Frequency-sweep signal source 611

Multiplexer/ Demultiplexer component 612

Detection signal

Local oscillator signal

Echo signal

Receiving apparatus 620

FIG. 6

$f$

Triangular wave $t$

$f$

Triangular wave $t$

$f$

Trapezoidal wave $t$

$f$

Trapezoidal wave $t$

$f$

Sawtooth wave $t$

$f$

Sawtooth wave $t$

$f$

Constant frequency waveform $t$

FIG. 7

FIG. 8

FIG. 9

FIG. 10

x-polarization $f$

Frequency-sweep
bandwidth B1

First frequency-
sweep signal

$t$

Second
frequency-sweep
signal

Frequency-sweep
bandwidth B2

$y$-polarization $f$

(1)

x-polarization $f$

Frequency-sweep
bandwidth B1

First frequency-
sweep signal

$t$

Second
frequency-sweep
signal

Frequency-sweep
bandwidth B2

$y$-polarization $f$

(2)

x-polarization $f$

Frequency-sweep
bandwidth B1

First frequency-
sweep signal

$t$

Second
frequency-sweep
signal

Frequency-sweep
bandwidth B2

$y$-polarization $f$

(3)

x-polarization $f$

Frequency-sweep
bandwidth B1

First frequency-
sweep signal

$t$

Second
frequency-sweep
signal

$y$-polarization $f$

(4)

FIG. 11

FIG. 12

EP 4 446 769 A1

Local oscillator signal

Receiving apparatus 620

| | | | | |
|---|---|---|---|---|
| Signal processor 6206 | First analog-to-digital converter 6204 | First photodetector 6202 | 90-degree frequency mixer 6201 | Receiving antenna |
| | Second analog-to-digital converter 6205 | Second photodetector 6203 | | |

FIG. 13

Local oscillator signal

Receiving apparatus 620

| | | | | |
|---|---|---|---|---|
| Signal processor 62014 | Analog-to-digital converter 62013 | Photodetector 62012 | 180-degree frequency mixer 62011 | Receiving antenna |

FIG. 14

FIG. 15A

Normal velocity

Excessively high velocity

EP 4 446 769 A1

(1)　　　　　　　　　　(2)　　　　　　　　　　(3)

FIG. 15B

FIG. 16

Frequency-sweep optical signal 1

Frequency-sweep laser 1

Frequency-sweep laser 2

Frequency-sweep optical signal 2

...

Frequency-sweep laser N

Frequency-sweep optical signal N

Wavelength division multiplexer 61211

Coupler 61212

Scanner

Local oscillator signal

Signal processor 6206

First analog-to-digital converter 6204

First photodetector 6202

90-degree frequency mixer 6201

Second analog-to-digital converter 6205

Second photodetector 6203

FIG. 17

Frequency-
sweep laser
61111

Frequency-sweep
optical signal 1

Frequency-
sweep laser
61112

Directional
waveguide
coupler
6121

Scanner

Frequency-sweep
optical signal 2

Local oscillator signal

Signal
processor
62014

Analog-to-
digital converter
62013

Photodetector
62012

180-degree
frequency mixer
62011

FIG. 18

```
┌─────────────────────────────────────┐
│  Frequency-sweep drive signal source │
│                1930                  │
└─────────────────────────────────────┘
          │                    │
          ▼                    ▼
┌──────────────┐      ┌──────────────┐
│    Radio     │      │    Radio     │
│  frequency   │      │  frequency   │
│ amplifier 1941│      │ amplifier 1942│
└──────────────┘      └──────────────┘
```

Laser 1910 → Modulator 1920 → Coupler 1950 → Scanner

Local oscillator signal

90-degree frequency mixer 6201 ← Scanner

First photodetector 6202 ← 90-degree frequency mixer 6201

First analog-to-digital converter 6204 ← First photodetector 6202

Signal processor 6206 ← First analog-to-digital converter 6204

Second photodetector 6203 ← 90-degree frequency mixer 6201

Second analog-to-digital converter 6205 ← Second photodetector 6203

Signal processor 6206 ← Second analog-to-digital converter 6205

FIG. 19

FIG. 20

Frequency-sweep signal transmitting component N

Frequency-sweep signal transmitting component 2

Frequency-sweep signal transmitting component 1

Frequency-sweep drive signal source 2101

Radio frequency amplifier 2102

Radio frequency amplifier 2103

Laser 2104

Modulator 2105

Coupler 2106

Scanner

Local oscillator signal

Signal processor 6206

First analog-to-digital converter 6204

First photodetector 6202

90-degree frequency mixer 6201

Second analog-to-digital converter 6205

Second photodetector 6203

FIG. 21

FIG. 22

EP 4 446 769 A1

Frequency-sweep drive signal source 1

Frequency-sweep drive signal source 2

...

Frequency-sweep drive signal source N

Laser 2301

Optical frequency comb 2302

Micro-ring modulator 1

Micro-ring modulator 2

...

Micro-ring modulator N

Directional waveguide coupler 2303

Scanner

Local oscillator signal

90-degree frequency mixer 6201

First photodetector 6202

First analog-to-digital converter 6204

Second photodetector 6203

Second analog-to-digital converter 6205

Signal processor 6206

FIG. 23

Frequency-sweep
optical signal 1

Frequency-
sweep laser 1

Frequency-
sweep laser 2

Frequency-sweep
optical signal 2

...

Frequency-
sweep laser N

Frequency-sweep
optical signal N

Polarization
beam combiner
2401

Polarization
maintaining coupler
2402

Scanner

Local oscillator signal

First analog-to-
digital converter
6204

First
photodetector
6202

90-degree
frequency mixer
6201

Signal
processor
6206

Second analog-
to-digital
converter
6205

Second
photodetector
6203

FIG. 24

Transmit N frequency-sweep optical signals, where N is an integer greater than 1; in the N frequency-sweep optical signals in a first time period, a frequency-sweep slope of a first frequency-sweep optical signal and a frequency-sweep slope of a second frequency-sweep optical signal are opposite in sign, or the frequency-sweep slope of the first frequency-sweep optical signal is 0 and the frequency-sweep slope of the second frequency-sweep optical signal is not 0; and frequencies of the N frequency-sweep optical signals are different

2501

Multiplex the N frequency-sweep optical signals to obtain a radar transmit signal, and split the radar transmit signal into a local oscillator signal and a detection signal

2502

Transmit the detection signal by using an antenna, where the local oscillator signal, together with an echo signal of the detection signal, is used for coherent detection, to obtain positioning information of a detected object

2503

Receive the echo signal of the detection signal from the antenna, and perform frequency mixing on the echo signal and the local oscillator signal to generate a frequency mixed signal

2504

Obtain the positioning information of the detected object based on the frequency mixed signal

2505

FIG. 25

## INTERNATIONAL SEARCH REPORT

| International application No. |
| --- |
| **PCT/CN2022/139889** |

**A. CLASSIFICATION OF SUBJECT MATTER**

G01S7/48(2006.01)i;G01S7/4861(2020.01)i;G01S7/487(2006.01)i;G01S17/02(2020.01)i

According to International Patent Classification (IPC) or to both national classification and IPC

**B. FIELDS SEARCHED**

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNABS; CNTXT; CNKI; 万方, WANFANG; 超星, CHAOXING; VEN; USTXT; EPTXT; WOTXT; IEEE: 不同, 频率, 本振, 差频, 拍频, 调频, 调制, 扫频, 多, 目标, 斜率, 虚假, 虚拟, different, frequency, rake ratio, gradient, opposite, modulat+, slope, chirp, sweep, multi+, target?, fake, false, gost, phantom

**C. DOCUMENTS CONSIDERED TO BE RELEVANT**

| Category* | Citation of document, with indication, where appropriate, of the relevant passages | Relevant to claim No. |
| --- | --- | --- |
| A | CN 112639523 A (HUAWEI TECHNOLOGIES CO., LTD.) 09 April 2021 (2021-04-09) description, paragraphs [0055]-[0146] | 1-25 |
| A | CN 112859061 A (LANZHOU UNIVERSITY OF TECHNOLOGY) 28 May 2021 (2021-05-28) entire document | 1-25 |
| A | CN 108008391 A (CENTRAL SOUTH UNIVERSITY) 08 May 2018 (2018-05-08) entire document | 1-25 |
| A | CN 113820688 A (ZHEJIANG LAB) 21 December 2021 (2021-12-21) entire document | 1-25 |
| A | US 2019361113 A1 (BOEING COMPANY) 28 November 2019 (2019-11-28) entire document | 1-25 |
| A | GB 2545678 A (CANON KK) 28 June 2017 (2017-06-28) entire document | 1-25 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **15 February 2023** | **07 March 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/139889**

| Patent document cited in search report | | | Publication date (day/month/year) | Patent family member(s) | | | Publication date (day/month/year) |
|---|---|---|---|---|---|---|---|
| CN | 112639523 | A | 09 April 2021 | None | | | |
| CN | 112859061 | A | 28 May 2021 | None | | | |
| CN | 108008391 | A | 08 May 2018 | None | | | |
| CN | 113820688 | A | 21 December 2021 | None | | | |
| US | 2019361113 | A1 | 28 November 2019 | US | 10955547 | B2 | 23 March 2021 |
| GB | 2545678 | A | 28 June 2017 | GB | 201522559 | D0 | 03 February 2016 |
| | | | | GB | 2545678 | B | 03 June 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111637896